# EUROPÄISCHE PATENTSCHRIFT

(11) **EP 3 455 064 B1**
(45) Veröffentlichungstag und Bekanntmachung des Hinweises auf die Patenterteilung: **20.04.2022**
(21) Anmeldenummer: 17724784.8
(22) Anmeldetag: 10.05.2017
(51) Int. Cl.: B32B 3/18, B32B 3/20, B32B 21/04

(54) **BAUELEMENT MIT DECKPLATTEN UND ROHRSEGMENTEN AUS EINEM HOLZWERKSTOFF**
COMPONENT HAVING COVER PLATES AND PIPE SEGMENTS MADE OF A WOOD MATERIAL
ÉLÉMENT DE CONSTRUCTION COMPRENANT DES PANNEAUX DE RECOUVREMENT ET DES SEGMENTS DE TUBE CONSTITUÉS D'UN MATÉRIAU DÉRIVÉ DU BOIS

(30) Priorität: 12.05.2016 DE 102016108854; 29.07.2016 DE 102016114138
(43) Veröffentlichungstag der Anmeldung: 20.03.2019
(73) Patentinhaber: Air Bamboo Industrial GmbH, 16225 Eberswalde (DE)
(72) Erfinder: KUHMANN, Jochen, 10783 Berlin (DE); ALBRECHT, Matthias, 10823 Berlin (DE); KUJUS-TENEKEDSHIJEW, Roman, 17192 Federow (DE)
(74) Vertreter: Schulz Junghans Patentanwälte PartGmbB
(86) Internationale Anmeldenummer: PCT/EP2017/061227
(87) Internationale Veröffentlichungsnummer: WO 2017/194630

(56) Entgegenhaltungen:
- WO-A1-03/059612
- GB-A- 2 234 935

## Beschreibung

Die Erfindung betrifft ein Bauelement, insbesondere zur Verwendung als Wand-, Boden- oder Deckenelement, ein System aus erfindungsgemäßen Bauelementen sowie ein Verfahren zur Herstellung eines erfindungsgemäßen Bauelements.

Aus dem Stand der Technik sind Bauelemente mit einer zwischen zwei Deckplatten angeordneten Mittellage aus Holzwerkstoffen bekannt. Beispielsweise offenbart die Schrift CH 254025 A eine Mittellage aus gefaltetem Furnier, wobei das gefaltete Furnier insbesondere aus gefalteten Vollrohren besteht. Dies hat den Nachteil, dass durch die überlappenden Teile der Vollrohre ein zusätzlicher Materialaufwand entsteht und das Gewicht der Bauelemente erhöht wird.

Die Schrift DE 670799 A offenbart ein Bauelement mit einer Mittellage aus durchgängigem gewelltem Furnier. Weiterhin offenbart die Schrift DE 10 2006 054 634 B4 ein Bauelement mit einer Mittellage aus durchgängigem gewinkeltem Furnier. Ein Nachteil dieser Ausgestaltungen ist das aufwendige Herstellungsverfahren der jeweiligen Mittellage.

In der Patentanmeldung DE 10 2009 005 102 A1 ist ein Bauelement mit einer durchgängigen Mittellage aus untereinander verbundenen Winkelleisten beschrieben, die jeweils mit nur einem Schnittende mit der anliegenden Deckschicht verbunden sind. Ein Nachteil dieser durchgängigen Mittellage ist seine aufwändige Konstruktionsweise und geringe Variationsmöglichkeit bei dem entsprechenden Herstellungsverfahren.

Das Dokument GB 2 234 935 A offenbart ein Bauelement mit Lagen aus Bambusrohrlängsschnitten mit jeweils 4 Schnittenden, die jeweils mit einer angrenzenden Platte mechanisch verbunden sind. Die Bambusrohrlängsschnitte weisen dabei eine an zwei Stellen geöffnete Wandung auf. Dies hat den Nachteil, dass die in den Bambusrohren vorhandenen Querverbindungen zwischen den zwei Hälften der Bambusrohrlängsschnitte essentiell sind, um eine zusammenhängende stabilisierende Struktur der Kernschicht des Bauelements zu bilden. Weiterhin zeichnen sich die Bambusrohrlängsschnitte durch einen aufwändigen Herstellungsprozess aus.

In den Schriften WO 2013 162405 A1 und WO 2013 162406 A1 ist eine Komposit-Schichtstruktur aus zwei Oberflächenlagen eines Trägermaterials und einer dazwischenliegenden Innenschicht einer verstärkten wabenförmigen Zellstruktur offenbart, die insbesondere aus längs zur Faserrichtung geschnittenen Platten bzw. Chips aus Bambus gebildet ist, wobei die Längserstreckung der Platten bzw. Chips in Faserrichtung wesentlich geringer ist als die Breite und Tiefe der Oberflächenlagen. Eine solche Kernschicht ist in der Herstellung aufwändig, da zum einen das Schneiden der Platten oder Chips aus Bambusrohren aufwändig ist, und andererseits eine Vielzahl von Platten bzw. Chips auf dem Trägermaterial angeordnet und mit dem Trägermaterial verbunden werden muss.

In dem Dokument WO 03/059612 A1 ist ein flexibles Isoliermaterial beschrieben, das aus einer Mehrzahl an Materiallagen besteht, wobei die Materiallagen halbrohrförmige Strukturen ausbilden, in denen spiralförmige Abstandselemente angeordnet sind.

Daraus ergibt sich die Aufgabe, ein stabiles, leichtes, variabel einsetzbares, einfach und kostengünstig herstellbares und nachhaltiges Bauelement zur Verfügung zu stellen. Diese Aufgabe wird durch den Gegenstand des Anspruchs 1 gelöst. Spezielle Ausführungsformen der Erfindung sind in den Unteransprüchen 2 bis 15 angegeben und werden im Folgenden beschrieben.

Ein erster Aspekt der Erfindung betrifft ein Bauelement mit einer Gesamtlänge, einer Gesamtbreite und einer Gesamthöhe, wobei die Gesamtlänge, die Gesamtbreite und die Gesamthöhe jeweils die Erstreckung des Bauelements in drei zueinander senkrecht angeordneten Raumrichtungen darstellen.

Das Bauelement weist wenigstens eine erste Deckplatte und eine parallel zu der ersten Deckplatte angeordnete zweite Deckplatte auf. Die erste Deckplatte und die zweite Deckplatte weisen jeweils eine Länge auf, die der Gesamtlänge entspricht und weisen eine Breite auf, die der Gesamtbreite entspricht.

Das Bauelement weist weiterhin wenigstens eine zwischen der ersten Deckplatte und der zweiten Deckplatte angeordnete Schicht auf, die jeweils eine Mehrzahl von in einer Reihe angeordneten Rohrsegmenten mit jeweils einer in Längserstreckungsrichtung verlaufenden Rohrlänge aufweist. Dabei sind die Rohrsegmente in Bezug auf ihre Rohrlänge parallel zu der Gesamtlänge und/ oder der Gesamtbreite angeordnet. Das bedeutet, dass entweder alle Rohrsegmente der Schicht in Richtung der Gesamtlänge verlaufen oder alle Rohrsegmente der Schicht in Richtung der Gesamtbreite verlaufen oder dass die Schicht mindestens ein Rohrsegment aufweist, das in Richtung der Gesamtlänge verläuft, und mindestens ein Rohrsegment aufweist, das in Richtung der Gesamtbreite verläuft.

Die Rohrsegmente bestehen aus einem Holzwerkstoff oder weisen einen Holzwerkstoff auf und weisen jeweils eine Wandung auf, die von genau zwei Schnittenden, in Umfangsrichtung des jeweiligen Rohrsegments begrenzt ist, wobei die Rohrlänge der Gesamtlänge und/ oder der Gesamtbreite entspricht. Mit anderen Worten: die Rohrsegmente erstrecken sich im Wesentlichen über die gesamte Länge bzw. Breite des Bauelements, wobei die Rohrsegmente über die gesamte Länge oder Breite durchgängig sind.

Dies hat den Vorteil einer höheren Stabilität des Bauelements. Zudem lässt sich mit Rohrsegmenten, die sich über die Gesamtbreite bzw. Gesamttiefe des Bauelements erstrecken, ein Bauelement mit geringerem Konstruktionsaufwand herstellen als vergleichbare Bauelemente mit kürzeren Rohrsegmenten.

Insbesondere weisen die Rohrsegmente eine einheitliche Rohrlänge auf.

Ein erfindungsgemäßes Bauelement weist vorteilhafterweise durch die Verwendung von einzelnen Rohrsegmenten im Gegensatz zu Falt- oder Wellfurnier als Mittellage eine besonders hohe Stabilität bei geringem Gewicht auf. Weiterhin lassen sich durch die Verwendung einzelner Rohrsegmente auf einfache Weise je nach Verwendungszweck unterschiedliche Anordnungen der Schichten erzeugen. Zudem sind die Einzelkomponenten des erfindungsgemäßen Bauelements, also insbesondere die Deckplatten und Rohrsegmente, einfach und kostengünstig aus Holzwerkstoffen herstellbar.

Im Zusammenhang der vorliegenden Erfindung ist mit dem Begriff Rohrsegment ein Teil eines wirklichen oder gedachten Rohres mit einer Längserstreckungsrichtung gemeint. Der Querschnitt des Rohres senkrecht zu seiner Längserstreckungsrichtung weist einen Umfang, also eine gedachte Linie, welche den Querschnitt an seiner Außenseite begrenzt, auf. Dabei ist der Querschnitt nicht zwangsläufig kreisförmig, sondern kann insbesondere auch eckig oder elliptisch ausgeformt sein. Die Umfangsrichtung des Rohres verläuft (auch im Fall eines Rohres mit einem eckigen Querschnitt) entlang eines gedachten Kreises, welcher den Querschnitt des Rohres senkrecht zur Längserstreckungsrichtung umgibt.

Das Rohrsegment zeichnet sich durch eine in Umfangsrichtung angeordnete Öffnung seiner Wandung aus. Die Öffnung ist dabei in Längserstreckungsrichtung durchgehend. Dabei ist mit der Umfangsrichtung des Rohrsegments die Umfangsrichtung des zugehörigen wirklichen oder gedachten Rohres gemeint, welches eine geschlossene Wandung aufweist. Das Rohrsegment kann insbesondere durch Schneiden des Rohres gebildet sein, kann aber auch auf andere Weise, insbesondere durch das mechanische Verbinden mehrerer Leisten oder durch ein Extruderverfahren, gebildet sein.

Die Schnittenden des Rohrsegments begrenzen das Rohrsegment in Umfangsrichtung. Die Öffnung des Rohrsegments in Umfangsrichtung wird also durch die Schnittenden begrenzt. Besagte Öffnung führt dazu, dass der Querschnitt des Rohrsegments durch ein offenes Profil gebildet ist. Das offene Profil kann insbesondere kreissegmentförmig, z.B. halbkreisförmig, U-förmig, V-förmig, trapezsegmentförmig oder achtecksegmentförmig ausgeformt sein.

Mit dem Begriff Längserstreckungsrichtung des Rohrsegments ist im Zusammenhang der vorliegenden Erfindung die Längserstreckungsrichtung des dazugehörigen (wirklichen oder gedachten) Rohres gemeint.

Der Begriff Holzwerkstoff bezeichnet im Zusammenhang der vorliegenden Erfindung einen Werkstoff, welcher zerkleinertes Holz, insbesondere Holzspäne, Hackschnitzel, Holzfurniere, Holzfurnierstreifen, Holzwolle, Holzfasern oder Holzstäube, oder andere Lignocellulosematerialien aufweist. Weiterhin kann der Holzwerkstoff insbesondere Bindemittel, Klebstoffe und/ oder Additiva aufweisen. Additiva können insbesondere Hydrophobisierungsmittel, Holzschutzmittel, Flammschutzmittel, Härter oder Farbpartikel sein. Zu den Bindemitteln gehören insbesondere Harnstoffleim, Kunstharze, z.B. Phenolharze, Isocyanate, Kunststoffe und/ oder Biokunststoffe. Holzfurniere und/ oder Holzfurnierstreifen dienen dabei insbesondere zur Herstellung von Sperrholz und/ oder Grobspanplatten (OSB-Platten).

Zu den Holzwerkstoffen gehören insbesondere Vollholzwerkstoffe, z.B. Massivholzplatten (gemäß DIN EN 12775) oder Leimholzplatten, Brettsperrholz, Brettschichtholz, Stabsperrholz, und/ oder lamelliertes Holz, Furnierholzwerkstoffe, z.B. Furniersperrholz (FU), Furnierschichtholz, Furnierstreifenholz, Biegesperrholz, Holzspanwerkstoffe, z.B. Flachpressplatten (P2), Strangpressplatten, Spanholzformteile, Grobspanplatten (OSB-Platten, gemäß DIN EN 300) und/ oder Spanstreifenholz (LSL), Holzfaserwerkstoffe, z.B. Holzfaserdämmplatten (HFD), poröse Faserplatten, Soft Boards (SB), mittelharte Faserplatten (MB), harte Faserplatten (HB oder HFH), Hartfaserplatten, extraharte Faserplatten (HFE), mitteldichte Faserplatten (MDF), hochdichte Faserplatten (*high density fiberboards,* HDF) und/ oder ultraleichte Faserplatten (ULDF), Arboform oder Flüssigholz.

Dabei bezeichnet der Begriff Faserplatten die in DIN EN 622 spezifizierten Holzwerkstoffe. Der Begriff Spanplatten bezeichnet die in den Normen DIN EN 309 und DIN EN 312 spezifizierten Holzwerkstoffe. Der Begriff Sperrholz bezeichnet die in den Normen DIN 68708 und DIN EN 313 spezifizierten Holzwerkstoffe.

Holzwerkstoffe haben als Grundmaterial für den Roh- und Innenausbau den Vorteil einer großen Materialfestigkeit und mechanischer Belastbarkeit bei gleichzeitiger Leichtigkeit.

Gemäß einer weiteren Ausführungsform weist der Holzwerkstoff einen Ligningehalt von >5%, insbesondere >10% Gewichtsanteil auf. Das bedeutet, dass insbesondere Papier und Pappe keine Holzwerkstoffe im Sinne der vorliegenden Erfindung darstellen, da bei der Papierherstellung z.B. durch chemische Bleichmittel das Lignin der verwendeten Holzrohstoffe weitgehend entfernt wird.

Gemäß einer weiteren Ausführungsform ist der Holzwerkstoff frei von chemischen Bleichmitteln.

Gemäß einer weiteren Ausführungsform ist der Holzwerkstoff in einem Trockenverfahren bei einer Holzfeuchte von < 20 % hergestellt. Dabei bezieht sich die prozentuale Angabe auf das Verhältnis des Wassergewichtes zu der absolut trockenen Holzmasse. Bei einem Trockenverfahren werden die Holzpartikel vor der Fliesbidlung und dem Pressen zum Produkt getrocknet und das Produkt weist eine Holzfeuchte von unter 20% auf. Der Leimauftrag kann vor oder nach dem Trocknen erfolgen.

Gemäß einer weiteren Ausführungsform weist der Holzwerkstoff unter Druck und/ oder Hitze verpresste Holzfasern auf. Gemäß einer weiteren Ausführungsform weist der Holzwerkstoff eine Dichte von > 800 kg/m³ auf. Hochdichte Faserplatten weisen beispielsweise eine Dichte in dem genannten Bereich auf.

Gemäß einer weiteren Ausführungsform ist das Rohrsegment aus einem span- und/oder faserbasierten Holzwerkstoff gebildet, wobei der span- und/oder faserbasierte Holzwerkstoff insbesondere ungeordnete Holzfasern aufweist. Das heißt, die Holzfasern weisen keine bevorzugte Faserrichtung auf. Zu diesen Holzwerkstoffen gehören z.B. hochdichte Faserplatten (HDF).

Gemäß einer weiteren Ausführungsform ist das Rohrsegment aus einem Material einer hochdichten Faserplatte (HDF) gebildet. Hochdichte Faserplatten (HDF) weisen eine besonders hohe Festigkeit aus.

Gemäß einer weiteren Ausführungsform ist das Rohrsegment bzw. sind die Rohrsegmente jeweils aus einer Mehrzahl von Leisten gebildet. Dabei verlaufen die Leisten in Längserstreckungsrichtung des Rohrsegments. Bei dieser Ausführungsform wird insbesondere ein Rohrsegment mit einem eckigen Querschnitt gebildet. Die Leisten sind dabei mechanisch miteinander verbunden. Insbesondere weisen die Leisten Gehrungen auf, wobei jeweils benachbarte Leisten des Rohrsegments an den Gehrungen mechanisch verbunden sind. Der Begriff Gehrung beschreibt dabei einen Zuschnitt, der im Querschnitt bezüglich der Längserstreckungsrichtung der jeweiligen Leiste unter einem spitzen oder stumpfen Winkel (also abweichend von 90°) verläuft.

Gemäß einer weiteren Ausführungsform sind die Leisten aus einem span- und/oder faserbasierten Holzwerkstoff mit ungeordneten Holzfasern, insbesondere einem Material einer hochdichten Faserplatte (HDF), gebildet.

Gemäß einer weiteren Ausführungsform sind die Leisten aus einem Material einer hochdichten Faserplatte (HDF) gebildet.

Gemäß einer weiteren Ausführungsform weisen die Leisten eine Dicke von < 8 mm auf.

Gemäß weiteren einer Ausführungsform ist wenigstens ein Rohrsegment des Bauelements aus gepresstem Holz, insbesondere gepressten Holzfasern oder Holzspänen gefertigt. Z.B. kann das Rohrsegment durch Zerteilen eines Rohrs aus gepresstem Holz gefertigt werden. Die Herstellung eines solchen Rohrs kann z.B. durch Verpressen einer Holzmasse umfassend zerkleinertes Holz, insbesondere Holzfasern oder Holzspäne, in einen Pressformkanal mit einer rohrförmigen Aussparung und Aushärten der Holzmasse gefertigt werden. Alternativ dazu kann auch ein Halbrohr oder Rohrsegment direkt durch Verpressen einer Holzmasse, insbesondere in einem Pressformkanal mit einer rohrsegmentförmigen Aussparung oder durch ein Flachpresswerkzeug mit einer geeigneten Kontur, gefertigt werden.

Gemäß einer weiteren Ausführungsform ist der Holzwerkstoff mittels eines Extruderverfahrens aus einer Holzmasse, insbesondere einer Dendromasse, hergestellt.

Eine Verwendung von gepresstem Holz erlaubt eine kostengünstige Herstellung von Rohren oder Rohrsegmenten nahezu beliebiger Form und Dimensionierung, wobei eine sehr einheitliche Dimensionierung der Rohre bzw. Rohrsegmente im Vergleich zu Naturprodukten erreicht werden kann.

Gemäß einer weiteren Ausführungsform weist die erste Deckplatte und/ oder die zweite Deckplatte einen Holzwerkstoff auf.

Gemäß einer weiteren Ausführungsform besteht die erste Deckplatte und/ oder die zweite Deckplatte aus einem Holzwerkstoff.

Gemäß einer weiteren Ausführungsform weist die Schicht wenigstens ein Rohrsegment auf, das mit der ersten Deckplatte mechanisch verbunden ist, wobei die Rohrlänge des wenigstens einen Rohrsegments in Richtung der Gesamtlänge verläuft, und wobei die Rohrlänge mindestens der Gesamtbreite, insbesondere mindestens dem Zweifachen der Gesamtbreite, entspricht. Ein solches Bauelement weist also eine Gesamtlänge auf, die mindestens so groß ist wie die Gesamtbreite.

Gemäß einer weiteren Ausführungsform weist die Schicht wenigstens ein Rohrsegment auf, dessen Rohrlänge mindestens dem Zweifachen der Gesamthöhe, insbesondere mindestens dem Vierfachen der Gesamthöhe, entspricht.

Gemäß einer weiteren Ausführungsform beträgt die Gesamtlänge weniger als 800 mm, insbesondere weniger als 600 mm, die Gesamtbreite weniger als 400 mm, insbesondere weniger als 300 mm, und die Gesamthöhe weniger als 400 mm, insbesondere weniger als 250 mm. Derartige Bauelemente weisen insbesondere eine kompakte ziegelsteinartige Form und Abmessung auf und lassen sich auf bekannte Weise zu größeren Baustrukturen verbinden.

Gemäß einer weiteren Ausführungsform weisen die Rohrsegmente einen eckigen Querschnitt, insbesondere einen achtecksegmentförmigen Querschnitt, auf.

Gemäß einer Ausführungsform weisen die Rohrsegmente einen achtecksegmentförmigen Querschnitt auf.

Dabei bedeutet der Begriff ,achtecksegmentförmiger Querschnitt', dass das Rohrsegment im Querschnitt senkrecht zu seiner Längserstreckungsrichtung die Form eines Segments eines Achtecks, insbesondere eines regelmäßigen Achtecks, aufweist. Mit anderen Worten, die Wandung des Rohrsegments weist Teilabschnitte auf, die im Querschnitt die Kanten eines Segments eines Achtecks bilden. Da es sich bei dem Rohrsegment um ein offenes Profil handelt, kann die Wandung dabei auch aus weniger als acht Teilabschnitten gebildet sein, z.B. aus fünf Teilabschnitten. Das entsprechende Achtecksegment besteht in diesem Fall aus fünf Kanten (drei Kanten des Achtecks sind weggelassen). Im Fall eines regelmäßigen Achtecks weisen die benachbarten Teilabschnitte des Rohrsegments (und die entsprechenden Kanten des Achtecksegments) zueinander jeweils einen Winkel von 45° auf. Bei fünf Teilabschnitten und einer regelmäßigen Achteckform sind insbesondere diejenigen Teilabschnitte, welche die Schnittenden ausbilden (also die äußeren Teilabschnitte, die jeweils nur mit einem benachbarten Teilabschnitt verbunden sind) parallel zueinander.

Die jeweiligen Teilabschnitte können jeweils Leisten sein, wobei die Leisten insbesondere über Gehrungen mechanisch verbunden (z.B. verleimt und/oder verpresst) sind.

Achtecksegmentförmige Rohrsegmente weisen vorteilhafterweise eine besonders hohe mechanische Stabilität bei Belastung senkrecht zu der Längserstreckungsrichtung des Rohrsegments auf.

Gemäß einer weiteren Ausführungsform weisen die Rohrsegmente einen trapezsegmentförmigen oder achtecksegmentförmigen Querschnitt, insbesondere einen trapezsegmentförmigen Querschnitt, auf.

Gemäß einer weiteren Ausführungsform weisen die Rohrsegmente einen kreissegmentförmigen Querschnitt auf.

Gemäß einer weiteren Ausführungsform weisen die Rohrsegmente einen trapezsegmentförmigen Querschnitt auf. Mit anderen Worten, die Wandung des Rohrsegments weist Teilabschnitte auf, die im Querschnitt die Kanten eines Segments eines Trapezes bilden. Da es sich bei dem Rohrsegment um ein offenes Profil handelt, kann die Wandung dabei auch aus weniger als vier Teilabschnitten gebildet sein, insbesondere aus drei Teilabschnitten. Das entsprechende Trapezsegment besteht in diesem Fall aus drei Kanten (eine Kante des Trapezes ist weggelassen).

Die jeweiligen Teilabschnitte können jeweils Leisten sein, wobei die Leisten insbesondere über Gehrungen mechanisch verbunden (z.B. verleimt und/oder verpresst) sind.

Trapezsegmentförmige Rohrsegmente können vorteilhafterweise besonders einfach hergestellt werden (z.B. aus drei über Gehrungen verbundenen Leisten) und weisen dabei eine hohe mechanische Stabilität bei Belastung senkrecht zu der Längserstreckungsrichtung des Rohrsegments auf.

Gemäß einer weiteren Ausführungsform weisen die Rohrsegmente einen U-förmigen Querschnitt auf.

Gemäß einer weiteren Ausführungsform weist die Wandung des Rohrsegments eine Dicke von < 8 mm auf.

Gemäß einer weiteren Ausführungsform weist die Wandung des Rohrsegments eine Abflachung auf. Eine solche Abflachung kann durch die Form der Wandung des Rohrsegments gegeben sein, beispielsweise bei einem eckigen, insbesondere U-förmigen, trapezsegmentförmigen oder achtecksegmentförmigen Querschnitt. In diesem Fall wird die Abflachung durch eine Fläche gebildet, welche an beiden Seiten, das heißt an beiden Schnittflächen, durch eine Kante der eckigen Querschnittsform begrenzt ist. Dabei ist die entsprechende Kante im Bereich der maximalen Segmenthöhe angeordnet.

Alternativ dazu, insbesondere im Fall einer gewölbten Wandung, z.B. mit kreissegmentförmigem Querschnitt, kann die Abflachung durch Zuschneiden oder Abschleifen des Rohrsegments erzeugt werden. Die Abflachung kann insbesondere eine Form eines Kreissegments oder Ellipsensegments haben, wobei der Radius dieses Kreissegments größer als der Außenradius des Rohrsegments im Fall eines kreissegmentförmigen Wandungsquerschnitts ist.

Gemäß einer weiteren Ausführungsform wird die Abflachung durch eine gedachte Sekante eines den Querschnitt der Wandung bildenden Kreisringabschnitts gebildet, wobei insbesondere die Schnittflächen des Rohrsegments den Querschnitt der Wandung bilden. Dabei ist die Sekante so angeordnet, dass der äußere den Kreisringabschnitt begrenzende Kreis an zwei Punkten von der Sekante geschnitten wird, der innere den Kreisringabschnitt begrenzende Kreis jedoch nicht von der Sekante geschnitten wird. Die Abflachung resultiert also nicht in einer Öffnung des Rohrsegments. Dabei verläuft die Abflachung insbesondere in Längserstreckungsrichtung des Rohrsegments. Insbesondere verläuft die Abflachung parallel zu den Schnittenden des Rohrsegments. Eine solche Abflachung kann besonders leicht durch Ansägen des Rohrsegments, insbesondere parallel zur Rohrlänge erzeugt werden. Alternativ dazu kann auch eine Mehrzahl von Abflachungen insbesondere durch Ansägen der Rohrsegmente eines Zwischenprodukts erzeugt werden.

Durch eine Abflachung des Rohrsegments ist ein besserer Formschluss bzw. eine größere Verbindungsfläche bei einem Verbinden der Rohrsegmente mit der ersten bzw. zweiten Deckplatte, einer Zwischenplatte oder Rohrsegmenten einer benachbarten Teilschicht möglich.

Gemäß einer weiteren Ausführungsform besteht die erste Deckplatte und/ oder die zweite Deckplatte aus einem Holzwerkstoff oder weist einen Holzwerkstoff auf.

Gemäß einer weiteren Ausführungsform sind die Rohrsegmente der wenigstens einen Schicht und die erste und zweite Deckplatte durch Verpressen mechanisch verbunden.

Gemäß einer weiteren Ausführungsform sind die Rohrsegmente der wenigstens einen Schicht und die erste und zweite Deckplatte durch Leimen mechanisch verbunden.

Gemäß einer weiteren Ausführungsform ist die Schicht aus einer in Richtung der Gesamtlänge oder der Gesamtbreite verlaufenden Reihe von parallel zueinander angeordneten Rohrsegmenten gebildet. Dabei sind die Rohrsegmente innerhalb der Reihe nebeneinander angeordnet. Bei einer Anordnung der Rohrsegmente entlang ihrer gemeinsamen Richtung der Rohrlängen (bei paralleler Ausrichtung) in Richtung der Gesamtlänge verläuft also die Reihe der Rohrsegmente in Richtung der Gesamtbreite. Bei einer Anordnung der Rohrsegmente in Richtung der Gesamtbreite verläuft dagegen die Reihe der Rohrsegmente in Richtung der Gesamtlänge. Die Reihe verläuft in einer gemeinsamen Ebene der Rohrsegmente bezogen auf die Gesamthöhe.

Derartige Bauelemente mit genau einer Schicht aus Rohrsegmenten weisen vorteilhafterweise eine geringe Dicke auf und können somit beispielsweise als dünne Wandverkleidungselemente eingesetzt werden.

Gemäß einer weiteren Ausführungsform weisen die Rohrsegmente quer zur Richtung ihrer Rohrlänge einen Abstand auf, der einer Segmentbreite oder weniger entspricht.

Gemäß einer weiteren Ausführungsform liegen die Rohrsegmente einer Reihe dicht aneinander an, wobei benachbarte Rohrsegmente der Reihe insbesondere mechanisch miteinander verbunden sind.

Gemäß einer weiteren Ausführungsform sind alle Rohrsegmente der Reihe mittels ihrer Schnittenden mit der ersten Deckplatte mechanisch verbunden.

Gemäß einer weiteren Ausführungsform sind alle Rohrsegmente der Reihe mittels ihrer Schnittenden mit der zweiten Deckplatte mechanisch verbunden.

Gemäß einer weiteren Ausführungsform sind alle Rohrsegmente der Schicht mittels ihrer Schnittenden mit der ersten Deckplatte und mittels ihrer Wandungen mit der zweiten Deckplatte mechanisch verbunden oder mittels ihrer Wandungen mit der ersten Deckplatte und mittels ihrer Schnittenden mit der zweiten Deckplatte mechanisch verbunden sind.

Gemäß einer weiteren Ausführungsform sind die Rohrsegmente der Reihe mittels ihrer Schnittenden abwechselnd mit der ersten Deckplatte und der zweiten Deckplatte mechanisch verbunden. Bei dieser Ausführungsform sind die Rohrsegmente alternierend angeordnet, wobei benachbarte Rohrsegmente gegeneinander um eine Achse entlang der Rohrlänge um 180° gedreht sind. Diese Anordnung weist insbesondere bei einer Druckbelastung von der Seite der ersten Deckplatte und der zweiten Deckplatte eine gleich gute mechanische Stabilität auf.

Gemäß einer weiteren Ausführungsform weist die Schicht wenigstens eine Teilschicht, insbesondere wenigstens zwei Teilschichten auf, wobei die wenigstens eine Teilschicht jeweils aus einer in Richtung der Gesamtlänge oder der Gesamtbreite verlaufenden Reihe von parallel zueinander angeordneten Rohrsegmenten gebildet ist.

Gemäß einer weiteren Ausführungsform weist die Schicht eine Mehrzahl von Teilschichten auf, wobei die Teilschichten jeweils aus einer in Richtung der Gesamtlänge oder der Gesamtbreite verlaufenden Reihe von parallel zueinander angeordneten Rohrsegmenten gebildet sind. Diese Ausführungsform weist also zwei oder mehr Teilschichten aus Rohrsegmenten auf, wobei jede Teilschicht in einer entsprechenden Ebene bezogen auf die Gesamthöhe verläuft, und wobei die Teilschichten in Richtung der Gesamthöhe des Bauelements gestapelt sind.

Gemäß einer weiteren Ausführungsform ist die Schicht aus einer Mehrzahl von Teilschichten gebildet.

Gemäß einer weiteren Ausführungsform weist die Schicht eine erste Teilschicht und eine zweite Teilschicht auf, wobei die Rohrsegmente der ersten Teilschicht mittels ihrer Schnittenden mit der ersten Deckplatte mechanisch verbunden sind, und wobei die Rohrsegmente der zweiten Teilschicht mittels ihrer Schnittenden mit der zweiten Deckplatte mechanisch verbunden sind. Die Schicht kann dabei durch die erste und zweite Teilschicht gebildet sein oder zwischen der ersten und zweiten Teilschicht weitere Teilschichten aufweisen.

Gemäß einer weiteren Ausführungsform weist die Schicht wenigstens eine weitere Teilschicht auf, die aus einer Mehrzahl von Rohrsegmenten gebildet ist, die jeweils in einer parallel zu der Gesamtlänge oder der Gesamtbreite verlaufenden Reihe angeordnet sind. Diese Ausführungsform weist also drei oder mehr Teilschichten auf, die in Richtung der Gesamthöhe gestapelt sind.

Mittels mehrerer Schichten von Rohrsegmenten lässt sich eine höhere Gesamtdicke des Bauelements erreichen. Die Verwendung einer Zwischenplatte erlaubt ein besonders einfaches mechanisches Verbinden der verschiedenen Schichten.

Gemäß einer weiteren Ausführungsform sind die Rohrsegmente der wenigstens einen Teilschicht mittels ihrer Wandungen jeweils mit entsprechenden Wandungen der Rohrsegmente einer benachbarten Teilschicht mechanisch verbunden.

Insbesondere bei der Verwendung von Rohrsegmenten mit einer Abflachung lassen sich bei dieser Anordnung zwei Schichten von Rohrsegmenten auf einfache Weise mittels der Wandungen mechanisch verbinden.

Eine Verbindung benachbarter Teilschichten mittels der Wandungen der Rohrsegmente erlaubt vorteilhafterweise das Weglassen einer Zwischenplatte, wodurch ein leichteres und günstiger herstellbares Bauelement zur Verfügung gestellt werden kann.

Gemäß einer weiteren Ausführungsform weist die Schicht weiterhin wenigstens eine Zwischenplatte auf, wobei die Rohrsegmente der wenigstens einen Teilschicht mittels ihrer Schnittenden über die wenigstens eine Zwischenplatte mit den Rohrsegmenten einer benachbarten Teilschicht mechanisch verbunden sind.

Dabei ist die wenigstens eine Zwischenplatte als Teil der Schicht zwischen der ersten und zweiten Deckplatte angeordnet und verläuft insbesondere parallel zu der ersten und zweiten Deckplatte.

Gemäß einer weiteren Ausführungsform sind die Rohrsegmente der wenigstens einen Teilschicht mittels ihrer Schnittenden über die wenigstens eine Zwischenplatte mit den Wandungen der Rohrsegmente einer benachbarten Teilschicht mechanisch verbunden.

Gemäß einer weiteren Ausführungsform weist die Zwischenplatte einen Holzwerkstoff auf.

Gemäß einer weiteren Ausführungsform besteht die Zwischenplatte aus einem Holzwerkstoff.

Die Verwendung einer Zwischenplatte erlaubt ein besonders einfaches mechanisches Verbinden der Rohrsegmente zweier benachbarter Teilschichten und erhöht vorteilhafterweise die mechanische Stabilität des erfindungsgemäßen Bauelements.

Gemäß einer weiteren Ausführungsform verlaufen die Rohrlängen der Rohrsegmente der wenigstens einen Teilschicht in Richtung der Gesamtlänge des Bauelements, wobei die Rohrlängen der Rohrsemente wenigstens einer weiteren Teilschicht in Richtung der Gesamtbreite des Bauelements verlaufen. Alternativ dazu verlaufen die Rohrlängen der Rohrsegmente der wenigstens einen Teilschicht in Richtung der Gesamtbreite des Bauelements, wobei die Rohrlängen der Rohrsemente wenigstens einer weiteren Teilschicht in Richtung der Gesamtlänge des Bauelements verlaufen. Das heißt in beiden Fällen, dass die Rohrsegmente der wenigstens einen Teilschicht in Bezug auf die Rohrlänge senkrecht zu den Rohrsegmenten der wenigstens einen weiteren Teilschicht angeordnet sind.

Gemäß einer weiteren Ausführungsform sind die wenigstens eine Teilschicht und die wenigstens eine weitere Teilschicht abwechselnd in Bezug auf die Gesamthöhe gestapelt. Hierbei verlaufen also die Rohrsegmente der benachbarten Teilschichten senkrecht zueinander.

Gemäß einer weiteren Ausführungsform weist die Schicht eine erste Teilschicht, eine zweite Teilschicht und eine zwischen der ersten Teilschicht und der zweiten Teilschicht angeordnete weitere Teilschicht auf, wobei die Rohrsegmente der ersten Teilschicht mittels ihrer Schnittenden mit der ersten Deckplatte mechanisch verbunden sind, und wobei die Rohrsegmente der zweiten Teilschicht mittels ihrer Schnittenden mit der zweiten Deckplatte mechanisch verbunden sind, und wobei die Rohrsegmente der ersten und zweiten Teilschichten in Richtung der Gesamtlänge des Bauelements verlaufen und wobei die Rohrsegmente der weiteren Teilschicht in Richtung der Gesamtbreite des Bauelements verlaufen. Alternativ dazu verlaufen die Rohrsegmente der ersten und zweiten Teilschichten in Richtung der Gesamtbreite des Bauelements verlaufen und die Rohrsegmente der weiteren Teilschicht verlaufen in Richtung der Gesamtlänge des Bauelements. Bei dieser Ausführungsform weist die Schicht also drei Teilschichten auf, wobei die Rohrsegmente der mittleren Teilschicht in Bezug auf die Rohrlängen senkrecht zu den Rohrsegmenten der beiden äußeren Teilschichten ausgerichtet sind.

Eine solche Anordnung erlaubt vorteilhafterweise ein Stapeln und mechanisches Verbinden mehrerer Schichten ohne die Verwendung von Zwischenplatten. Durch die senkrechte Anordnung der benachbarten Teilschichten lassen sich die Schnittenden der Rohrsegmente einer Teilschicht einfach unter Ausnutzung einer relativ großen Auflagefläche mit den Wandungen der benachbarten Teilschicht verbinden. Aufgrund der fehlenden Zwischenplatten wird Material eingespart und die Herstellungskosten werden gesenkt. Zudem lässt sich ein geringeres Gewicht des erfindungsgemäßen Bauelements bei guter mechanischer Stabilität erreichen.

Gemäß einer weiteren Ausführungsform weist das Bauelement wenigstens ein Dämmelement auf. Hierbei bezeichnet der Begriff Dämmelement ein Material oder ein Bauteil mit wärmedämmenden und/ oder schalldämmenden Eigenschaften. Luft, welche sich in den Hohlräumen des erfindungsgemäßen Bauelements befindet, gilt nicht als Dämmelement im Sinne der Erfindung.

Gemäß einer weiteren Ausführungsform ist das wenigstens eine Dämmelement in einem Hohlraum angeordnet, der von wenigstens einem der Rohrsegmente des Bauelements gebildet wird.

Die Hohlräume, welche von den Rohrsegmenten, bzw. zwischen den Rohrsegmenten und den Deck- oder Zwischenplatten gebildet werden, lassen sich mit Dämmstoffen füllen. Dies hat bei einer Verwendung des Bauelements als Wandelement, insbesondere bei Außenwänden, den Vorteil, dass das Bauelement bereits einen Dämmstoff enthält und keine separaten Dämmelemente verbaut werden müssen.

Gemäß einer weiteren Ausführungsform ist das Dämmelement als Dämmplatte aus einem Dämmstoff, insbesondere als Faserdämmplatte, gebildet, wobei die Dämmplatte mit der ersten Deckplatte oder der zweiten Deckplatte des Bauelements mechanisch verbunden ist.

Gemäß einer weiteren Ausführungsform bildet die erste Deckplatte und/ oder die zweite Deckplatte das Dämmelement. Dabei ist die erste und/ oder zweite Deckplatte als Dämmplatte aus einem Dämmstoff gebildet.

Gemäß einer weiteren Ausführungsform weist das wenigstens eine Dämmelement eine Form auf, die wenigstens einem Hohlraum entspricht, der von den Rohrsegmenten gebildet wird, so dass das Dämmelement zumindest teilweise formschlüssig in den Hohlraum einbringbar ist. Dabei besteht das Dämmelement aus einem Dämmstoff oder weist einen Dämmstoff auf. Insbesondere ist der Dämmstoff Styropor, Polyurethan oder eine Faserdämmmatte. Solche entsprechend geformten Dämmelemente können durch Zuschneiden gebildet werden und in die entsprechenden Hohlräume eingebracht werden. Alternativ dazu können Dämmstoffe, z.B. Polyurethan-Schaum in den entsprechenden Hohlraum eingespritzt werden. Es ist auch denkbar, faserförmiges Dämmmaterial in den entsprechenden Hohlraum einzublasen, wenn das erfindungsgemäße Bauelement an den Stirnseiten geschlossen ist.

Gemäß einer weiteren Ausführungsform ist das Bauelement als (insbesondere aufrechtes) Wandelement, (insbesondere waagerechtes) Deckenelement, Bodenelement, Balken, Ziegel oder Langziegel ausgeformt. Bei einem aufrechten Wandelement sind dabei die Rohrsegmente wenigstens einer Schicht, insbesondere aller Schichten, in Bezug auf ihre Rohrlänge aufrecht angeordnet. Bei einem waagerechten Bauelement sind die die Rohrsegmente wenigstens einer Schicht, insbesondere aller Schichten, in Bezug auf ihre Rohrlänge waagerecht angeordnet.

Gemäß einer weiteren Ausführungsform weist das Wandelement, das Deckenelement oder das Bodenelement eine Gesamtlänge zwischen 2000 und 3000 mm, insbesondere 2500 mm, und eine Gesamtbreite (bei entsprechender Anordnung im Bauwesen auch als Wandhöhe bezeichnet) zwischen 1000 und 1500 mm, insbesondere 1250 mm, auf.

Gemäß einer weiteren Ausführungsform weist der Ziegel eine Gesamtlänge zwischen 250 mm und 750 mm, insbesondere 500 mm, und eine Gesamtbreite (bei entsprechender Anordnung im Bauwesen auch als Ziegelhöhe bezeichnet) zwischen 200 und 300 mm, insbesondere 250 mm, auf.

Gemäß einer weiteren Ausführungsform weist der Langziegel eine Gesamtlänge zwischen 1500 und 2500 mm, insbesondere 2.000 mm, und eine Gesamtbreite (bei entsprechender Anordnung im Bauwesen auch als Ziegelhöhe bezeichnet) zwischen 200 und 300 mm, insbesondere 250 mm, auf.

Gemäß einer weiteren Ausführungsform weist der Balken eine Gesamtlänge zwischen 2000 und 3000 mm, insbesondere 2.500 mm, und eine Gesamtbreite zwischen 200 und 300 mm, insbesondere 250 mm, auf. Die Gesamthöhe (bzw. Wandstärke bei entsprechender Anordnung) richtet sich dabei nach der Verwendung und liegt insbesondere zwischen 90 und 360 mm.

Gemäß einer weiteren Ausführungsform weist das Bauelement wenigstens eine Abschlussplatte auf, die das Bauelement senkrecht zu der ersten Deckplatte und zu der zweiten Deckplatte abschließt. Insbesondere weist das Bauelement zwei Abschlussplatten auf, welche das Bauelement beidseitig abschließen.

Durch solche Abschlussplatte werden die von den Rohrsegmenten gebildeten Hohlräume einseitig bzw. beidseitig verschlossen. Dies erlaubt vorteilhafterweise das Einbringen von losem Fasermaterial oder eines Schaums in die Hohlräume.

Insbesondere ist das Bauelement bei einer Verwendung als Außenwandelement an einer Gebäudeaußenseite wetterfest ausgeführt. Insbesondere weist das Bauteil an einer Innenseite eine dekorative Oberfläche auf.

Gemäß einer weiteren Ausführungsform weist das Bauelement wenigstens eine Nut und/ oder wenigstens eine Feder auf, wobei die wenigstens eine Nut und die wenigstens eine Feder dazu ausgebildet sind, eine formschlüssige mechanische Verbindung zwischen dem Bauelement und einem weiteren Bauelement zu bilden.

Hierdurch lassen sich vorteilhafterweise aus mehreren erfindungsgemäßen Bauelementen größere Strukturen aufbauen.

Ein zweiter Aspekt der Erfindung betrifft ein System aufweisend eine Mehrzahl von Bauelementen nach dem ersten Aspekt der Erfindung, wobei die Bauelemente mechanisch verbunden sind.

Gemäß einer Ausführungsform des Systems weisen die Bauelemente jeweils wenigstens eine Nut und/ oder wenigstens eine Feder auf, wobei die wenigstens eine Nut und die wenigstens eine Feder dazu ausgebildet sind, eine formschlüssige mechanische Verbindung zwischen den Bauelementen des Systems zu bilden.

Ein dritter Aspekt der Erfindung betrifft ein Verfahren zur Herstellung eines Bauelements nach dem ersten Aspekt der Erfindung, wobei das Verfahren zumindest die folgenden Schritte aufweist:
- Bereitstellen einer ersten Deckplatte,
- Bilden einer Schicht durch Anordnen einer Mehrzahl von Rohrsegmenten auf der ersten Deckplatte,
- Anordnen einer zweiten Deckplatte auf der Schicht,
- Bilden eines Bauelements durch mechanisches Verbinden, insbesondere Verleimen oder Verpressen, der ersten und zweiten Deckplatte und der wenigstens einen Schicht.

Gemäß einer Ausführungsform des Verfahrens wird die Schicht aus einer Mehrzahl von Teilschichten gebildet, wobei die Teilschichten jeweils eine Mehrzahl von Rohrsegmenten aufweisen.

Gemäß einer weiteren Ausführungsform des Verfahrens wird wenigstens eine Zwischenplatte auf einer entsprechenden Teilschicht angeordnet.

Ein weiterer Aspekt der Erfindung betrifft einen Sandwich-Block, aufweisend wenigstens zwei Stegschichten, die jeweils aus wenigstens einem Steg ausgebildet sind. Dabei sind die Stegschichten in Richtung der Segmenthöhe ihrer Stege gestapelt, wobei optional zwischen zwei benachbarten Stegschichten eine Blockplattenschicht angeordnet sein kann und wobei insbesondere die Rohrsegmente der Stege in Bezug auf ihre jeweilige Längserstreckungsrichtung parallel zueinander angeordnet sind.

Dabei weist der besagte Steg eine Stegbasis und wenigstens ein Rohrsegment, insbesondere mehrere Rohrsegmente, auf. Dabei weist das wenigstens eine Rohrsegment jeweils eine Wandung auf, die in Umfangsrichtung des jeweiligen Rohrsegments durch zwei Schnittenden begrenzt ist, wobei das wenigstens eine Rohrsegment jeweils mittels wenigstens eines der Schnittenden, insbesondere mittels beider Schnittenden, mit der Stegbasis mechanisch verbunden ist, und wobei die Wandung des wenigstens einen Rohrsegments in Längserstreckungsrichtung des jeweiligen Rohrsegments durch zwei Schnittflächen begrenzt ist, und wobei das wenigstens eine Rohrsegment aus einem Holzwerkstoff besteht oder einen Holzwerkstoff aufweist.

Der besagte Sandwich-Block eignet sich insbesondere auch als Bauelement im Sinne der vorliegenden Erfindung.

Gemäß einer Ausführungsform weist der Sandwich-Block wenigstens eine erste Stegschicht, eine zweite Stegschicht und/ oder eine Blockplattenschicht (im Kontext dieser Anmeldung auch als Zwischenplatte bezeichnet) auf. Dabei weist die erste Stegschicht wenigstens einen ersten Steg auf und die eine zweite Stegschicht weist wenigstens einen zweiten Steg auf. Die Blockplattenschicht ist aus einer Platte mit einer ersten Plattenseite ausgebildet. Der Sandwich-Block kann also entweder wenigstens eine erste Stegschicht und wenigstens eine zweite Stegschicht oder wenigstens eine erste Stegschicht und wenigstens eine Blockplattenschicht oder wenigstens eine erste Stegschicht und wenigstens eine zweite Stegschicht und wenigstens eine Blockplattenschicht aufweisen.

Gemäß einer Ausführungsform weist der Sandwich-Block eine Mehrzahl von direkt ohne dazwischenliegende Blockplattenschicht mechanisch miteinander verbundenen Stegschichten auf.

Gemäß einer weiteren Ausführungsform ist jede Stegschicht mit einer angrenzenden Blockplattenschicht verbunden, so dass der Sandwichblock aus jeweils abwechselnd gestapelt angeordneten Stegschichten und Blockplattenschichten ausgebildet ist.

Gemäß einer Ausführungsform des Sandwich-Blocks ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit der Stegbasis der angrenzenden zweiten Stegschicht mechanisch verbunden.

Gemäß einer Ausführungsform des Sandwich-Blocks ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit der ersten Plattenseite der angrenzenden Blockplattenschicht mechanisch verbunden.

Gemäß einer weiteren Ausführungsform ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit einer Wandung des wenigstens einen Rohrsegments der angrenzenden zweiten Stegschicht mechanisch verbunden.

Gemäß einer Ausführungsform des Sandwich-Blocks ist der wenigstens eine erste Steg der ersten Stegschicht mittels seiner Stegbasis mit der Stegbasis der angrenzenden zweiten Stegschicht mechanisch verbunden.

Gemäß einer Ausführungsform des Sandwich-Blocks ist der wenigstens eine erste Steg der ersten Stegschicht mittels seiner Stegbasis mit der ersten Plattenseite der angrenzenden Blockplattenschicht mechanisch verbunden.

Gemäß einer Ausführungsform wird die erste Stegschicht aus genau einem ersten Steg gebildet. Gemäß einer weiteren Ausführungsform wird die zweite Stegschicht aus genau einem zweiten Steg gebildet. Gemäß einer weiteren Ausführungsform ist die erste Stegschicht genau von einem ersten Steg gebildet und die zweite Stegschicht ist von genau einem zweiten Steg gebildet.

Gemäß einer weiteren Ausführungsform ist die erste Stegschicht von einer Mehrzahl von ersten Stegen gebildet und/ oder die zweite Stegschicht ist von einer Mehrzahl von zweiten Stegen gebildet, wobei die ersten Stege und die zweiten Stege jeweils in Bezug auf ihre jeweilige Stegbasis parallel zueinander angeordnet sind.

Gemäß einer Ausführungsform des Sandwich-Blocks sind die erste Stegschicht und die zweite Stegschicht des Sandwich-Blocks derart zueinander angeordnet, dass die Rohrsegmente der ersten Stege in Bezug auf ihre Längserstreckungsrichtung parallel zueinander angeordnet sind. Dabei ist insbesondere die wenigstens eine Blockplattenschicht parallel zu der gemeinsamen Längserstreckungsrichtung der Rohrsegmente angeordnet.

Gemäß einer weiteren Ausführungsform weist der Sandwich-Block eine Blockplattenschicht auf, die den Sandwich-Block einseitig abschließt.

Gemäß einer weiteren Ausführungsform grenzt jede Stegschicht des Sandwich-Blocks an eine Blockplattenschicht an, insbesondere wobei die Stegschichten und Blockplattenschichten abwechselnd schichtweise angeordnet sind.

Gemäß einer weiteren Ausführungsform weist wenigstens ein Steg des Sandwich-Blocks, insbesondere jeder Steg des Sandwich-Blocks jeweils wenigstens zwei Rohrsegmente auf, wobei jedes Rohrsegment der wenigstens zwei Rohrsegmente des entsprechenden Stegs mit einer ersten Fläche der Stegbasis des entsprechenden Stegs verbunden ist. Dabei weist der Sandwich-Block insbesondere eine Mehrzahl von direkt ohne dazwischenliegende Blockplattenschicht mechanisch miteinander verbundenen Stegschichten auf.

Gemäß einer weiteren Ausführungsform weist jeder Steg des Sandwich-Blocks wenigstens ein erstes Rohrsegment und ein zweites Rohrsegment auf, wobei das erste Rohrsegment mit einer ersten Fläche der Stegbasis des entsprechenden Stegs verbunden ist, und wobei das zweite Rohrsegment mit einer der ersten Fläche gegenüberliegenden zweiten Fläche der Stegbasis des entsprechenden Stegs verbunden ist, insbesondere wobei entlang einer Stegbreite des entsprechenden Stegs die ersten Rohrsegmente und die zweiten Rohrsegmente abwechselnd an der Stegbasis des entsprechenden Stegs angeordnet sind. Dabei ist insbesondere jede Stegschicht mit einer angrenzenden Blockplattenschicht verbunden, so dass der Sandwichblock aus jeweils abwechselnd gestapelt angeordneten Stegschichten und Blockplattenschichten ausgebildet ist.

Gemäß einer weiteren Ausführungsform weist der Sandwich-Block wenigstens eine Deckplatte auf, welche parallel zu den Stegschichten und/ oder Blockplattenschichten ausgerichtet ist und den Sandwich-Block einseitig abschließt.

Gemäß einer weiteren Ausführungsform weist der Sandwich-Block wenigstens eine Randplatte auf, welche senkrecht zu den Stegschichten und/ oder Blockplattenschichten des Sandwich-Blocks ausgerichtet ist und den Sandwich-Block einseitig abschließt.

Eine Deckplatte bzw. Randplatte verleiht dem Sandwich-Block zusätzliche Stabilität. Insbesondere kann durch Zerteilen des Sandwich-Blocks in wenigstens eine Kernschicht einer Sandwich-Platte aus der Deckplatte wenigstens eine Deckleiste bzw. aus der Randplatte wenigstens eine Randleiste der Kernschicht erzeugt werden, wobei die Deckleiste bzw. Randleiste der Kernschicht zusätzliche Stabilität verleiht.

Ein weiterer Aspekt der Erfindung betrifft ein Verfahren zur Herstellung eines Stegs, Bauelements oder Sandwich-Blocks, wobei das Rohrsegment mittels wenigstens der folgenden Schritte hergestellt wird: Bereitstellen eines Bretts, insbesondere einer HDF-Platte, Erzeugen einer Mehrzahl von Leisten durch Einbringen, insbesondere Ausfräsen, einer Mehrzahl von Gehrungen, wobei insbesondere die Leisten mittels der Gehrungen nicht vollständig voneinander getrennt werden; Bilden eines Rohrsegments aus den Leisten, wobei die Leisten insbesondere miteinander verleimt werden. Eine unvollständige Trennung der Leisten bei der Einbringung der Gehrungen hat den Vorteil, dass aus den zusammenhängenden Leisten einfacher ein Rohr gebildet werden kann als aus getrennten Leisten. Zudem bilden die Gehrungen bei dieser Ausgestaltung des Verfahrens Vertiefungen zur Aufnahme von Leim, was das Zusammenfügen des Rohrs vereinfacht.

Insbesondere weist das gebildete Rohrsegment einen eckigen Querschnitt, insbesondere einen U-förmigen, trapezsegmentförmigen oder achtecksegmentförmigen Querschnitt, auf, wobei jeweils eine Kante des eckigen Querschnitts von einer Leiste gebildet wird. Insbesondere weist das gebildete Rohrsegment eine Abflachung auf, wobei die Abflachung durch eine Leiste gebildet wird. Mittels eines derartigen Verfahrens lassen sich kostengünstig und einfach Rohrsegmente herstellen.

Weitere Einzelheiten und Vorteile der Erfindung werden durch die nachfolgende Beschreibung von Ausführungsbeispielen an Hand von Figuren erläutert. Es zeigen:
- Fig. 1: eine schematische Darstellung eines Rohrsegments,
- Fig. 2: eine schematische Darstellung eines erfindungsgemäßen Bauelements,
- Fig. 3: eine schematische Darstellung eines erfindungsgemäßen Bauelements mit zwei Teilschichten aus Rohrsegmenten,
- Fig. 4: eine schematische Darstellung eines erfindungsgemäßen Bauelements mit drei Teilschichten aus Rohrsegmenten und zwischen den Schichten angeordneten Zwischenplatten,
- Fig. 5: eine schematische Darstellung eines erfindungsgemäßen Bauelements mit drei Teilschichten, wobei die benachbarten Schichten quer zueinander angeordnet sind,
- Fig. 6: ein Zwischenprodukt zur Herstellung eines erfindungsgemäßen Bauelements,
- Fig. 7: Dämmelemente zum Einbau in ein erfindungsgemäßes Bauelement,
- Fig. 8: ein als aufrechtes Wandelement ausgeformtes erfindungsgemäßes Bauelement,
- Fig. 9: ein als Balken ausgeformtes erfindungsgemäßes Bauelement,
- Fig. 10: ein als Ziegel ausgeformtes erfindungsgemäßes Bauelement,
- Fig. 11: ein Rohrsegment mit einer Abflachung;
- Fig. 12:: eine erste Ausgestaltung eines Stegs,
- Fig. 13:: eine zweite Ausgestaltung eines Stegs,
- Fig. 14:: eine perspektivische Ansicht einer ersten Ausgestaltung eines Sandwich-Blocks,
- Fig. 15:: einen Teilschnitt eines Sandwich-Blocks gemäß der ersten Ausgestaltung,
- Fig. 16:: eine perspektivische Ansicht einer zweiten Ausgestaltung eines Sandwich-Blocks,
- Fig. 17:: einen Teilschnitt eines Sandwich-Blocks gemäß der zweiten Ausgestaltung.
- Fig. 18:: ein Rohrsegment mit einem U-förmigen Profil;
- Fig. 19:: ein Rohrsegment mit einem trapezsegmentförmigen Profil;
- Fig. 20:: ein Rohrsegment mit einem achtecksegmentförmigen Profil;
- Fig. 21:: eine schematische Darstellung eines Herstellungsverfahrens für ein Rohrsegment mit U-förmigem Profil;
- Fig. 22:: eine schematische Darstellung eines Herstellungsverfahrens für ein Rohrsegment mit einem trapezsegmentförmigen Profil;
- Fig. 23:: eine schematische Darstellung eines Herstellungsverfahrens für ein Rohrsegment mit einem achtecksegmentförmigen Profil.

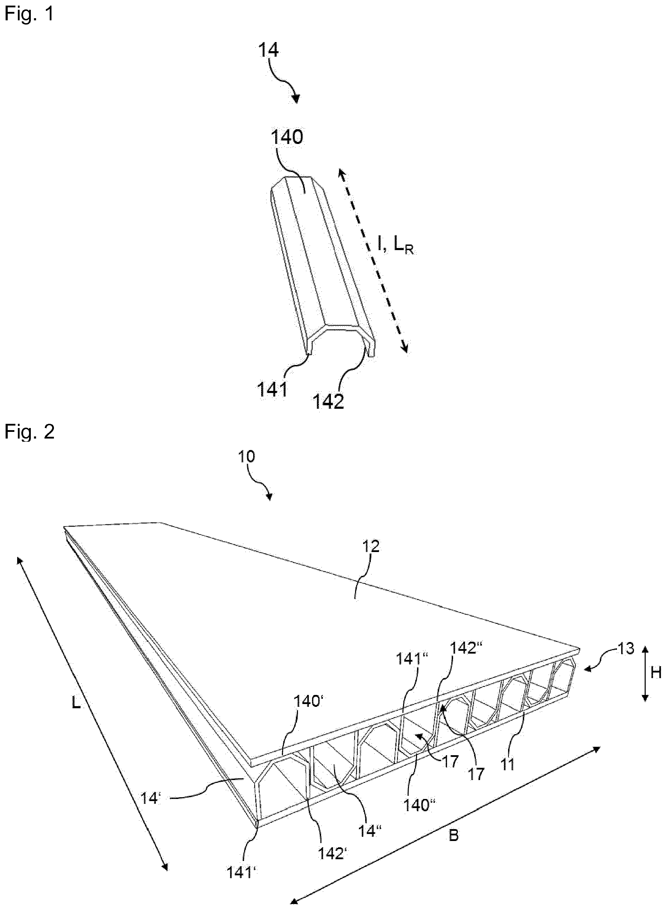

Im Einzelnen zeigt die Figur 1 ein Rohrsegment 14, das entlang einer Längserstreckungsrichtung I erstreckt ist und eine Wandung 140 sowie zwei die Wandung 140 in Umfangsrichtung des Rohrsegments 14 begrenzende Schnittenden 141,142 aufweist. In der hier gezeigten Ausführungsform weist das Rohrsegment 14 quer zu der Längserstreckungsrichtung I einen achtecksegmentförmigen Querschnitt auf. Das Rohrsegment 14 ist aus fünf entlang der Längserstreckungsrichtung I verlaufenden Leisten zusammengesetzt, die jeweils zu der oder den benachbarten Leisten einen Winkel von 45° aufweisen.

Alternativ zu der in der Figur 1 gezeigten Ausführungsform kann das Rohrsegment 14 auch einen anders geformten Querschnitt, insbesondere einen kreissegmentförmigen, z.B. halbkreisförmigen, trapezsegmentförmigen oder U-förmigen Querschnitt, aufweisen.

Die Figur 2 zeigt ein erfindungsgemäßes Bauelement 10 mit einer ersten Deckplatte 11, einer parallel zu der ersten Deckplatte 11 angeordneten zweiten Deckplatte 12 und einer zwischen den Deckplatten 11,12 verlaufenden Schicht 13 aus Rohrsegmenten 14',14". Die Rohrsegmente 14',14" sind abwechselnd in einer Reihe angeordnet, so dass die Rohrsegmente 14' jeweils mindestens ein benachbartes Rohrsegment 14" aufweisen. Die Rohrsegmente 14' bilden dabei eine erste Teilschicht und die Rohrsegmente 14" bilden eine zweite Teilschicht, wobei die Teilschichten derart angeordnet sind, dass aus den beiden Teilschichten eine einzige alternierende Reihe von Rohrsegmenten 14',14" gebildet wird. Dabei sind die Rohrsegmente 14'mittels ihrer Schnittenden 141',142' mit der ersten Deckplatte 11 mechanisch verbunden und mittels ihrer Wandungen 140' mit der zweiten Deckplatte 12 mechanisch verbunden. Die Rohrsegmente 14" sind mittels ihrer Wandungen 140" mit der ersten Deckplatte 11 mechanisch verbunden und mittels ihrer Schnittenden 141",142" mit der zweiten Deckplatte 12 mechanisch verbunden.

Die Rohrsegmente 14',14" der Schicht 13 sind in Bezug auf ihre Längserstreckungsrichtung I parallel zueinander angeordnet und liegen dicht aneinander an, so dass die Rohrsegmente 14' jeweils mit einem quer zu den ersten und zweiten Deckplatten 11,12 verlaufenden Abschnitt ihrer Wandung 140' an einem entsprechenden Abschnitt der Wandung 140" des benachbarten Rohrsegments 14" formschlüssig anliegen. Die entsprechenden Abschnitte der Wandungen 140',140" können ebenfalls mechanisch miteinander verbunden, z.B. verleimt, sein.

Zwischen den Rohrsegmenten 14',14" und den ersten und zweiten Deckplatten 11,12 werden Hohlräume 17 gebildet, die insbesondere mit einem Dämmstoff, z.B. in Form eines Dämmelements 16 gefüllt sein können.

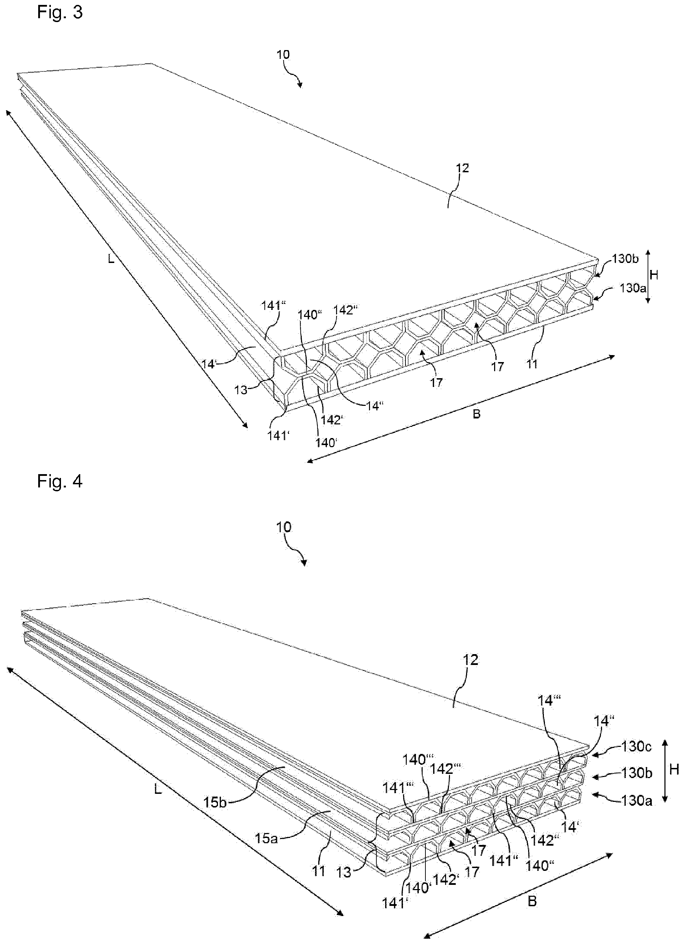

Die Figur 3 zeigt ein weiteres erfindungsgemäßes Bauelement 10, wobei die Schicht 13 durch eine erste Teilschicht 130a und eine zweite Teilschicht 130b aus Rohrsegmenten14',14" gebildet ist. Die Rohrsegmente 14' der ersten Teilschicht 130a sind mittels ihrer Schnittenden 141',142' mit der ersten Deckplatte 11 mechanisch verbunden und die Rohrsegmente 14" der zweiten Teilschicht 130b sind mittels ihrer Schnittenden 141",142" mit der zweiten Deckplatte 12 mechanisch verbunden. Die Rohrsegmente 14' der ersten Teilschicht 130a sind in Bezug auf ihre Längserstreckungsrichtung I parallel zu den Rohrsegmenten 14" der zweiten Teilschicht 130b angeordnet. Die Rohrsegmente 14' der ersten Teilschicht 130a sind mittels ihrer Wandungen 140' mit der Wandung 140" eines entsprechenden Rohrsegments 14" der zweiten Teilschicht 130b mechanisch verbunden. Die Rohrsegmente 14',14" bilden mit den ersten und zweiten Deckplatten 11,12 bzw. mit den jeweils benachbarten Rohrsegmenten 14',14" Hohlräume 17 aus, die insbesondere mit einem Dämmstoff, z.B. in Form eines Dämmelements 16 gefüllt sein können.

In der Figur 4 ist ein weiteres erfindungsgemäßes Bauelement 10 dargestellt, wobei die Schicht 13 durch eine erste Teilschicht 130a aus Rohrsegmenten 14', eine zweite Teilschicht 130b aus Rohrsegmenten 14", eine weitere Teilschicht 130c aus Rohrsegmenten 14‴, eine erste Zwischenplatte 15a und eine zweite Zwischenplatte 15b gebildet ist. Die erste Zwischenplatte 15a ist zwischen der ersten Teilschicht 130a und der zweiten Teilschicht 130b angeordnet und die zweite Zwischenplatte 15b ist zwischen der zweiten Teilschicht 130b und der weiteren Teilschicht 130c angeordnet.

Dabei sind die Rohrsegmente 14' der ersten Teilschicht 130a mittels ihrer Schnittenden 141',142' mit der ersten Deckplatte 11 sowie mittels ihrer Wandungen 140' mit der ersten Zwischenplatte 15a mechanisch verbunden. Die Rohrsegmente 14" der zweiten Teilschicht 130b sind mittels ihrer Schnittenden 141",142" mit der ersten Zwischenplatte 15a und mittels ihrer Wandungen 140" mit der zweiten Zwischenplatte 15b mechanisch verbunden. Die Rohrsegmente 14‴ der weiteren Teilschicht 130c sind mittels ihrer Schnittenden 141‴,142‴ mit der zweiten Zwischenplatte 15b und mittels ihrer Wandungen 140‴ mit der zweiten Deckplatte 12 mechanisch verbunden. Die Rohrsegmente 14',14",14‴ der ersten Teilschicht 130a, der zweiten Teilschicht 130b und der weiteren Teilschicht 130c sind in Bezug auf ihre Längserstreckungsrichtung I parallel zueinander angeordnet.

Die Rohrsegmente 14',14", 14‴ bilden mit den ersten und zweiten Deckplatten 11,12 bzw. mit der ersten Zwischenplatte 15a oder der zweiten Zwischenplatte 15b Hohlräume 17 aus, die insbesondere mit einem Dämmstoff, z.B. in Form eines Dämmelements 16 gefüllt sein können.

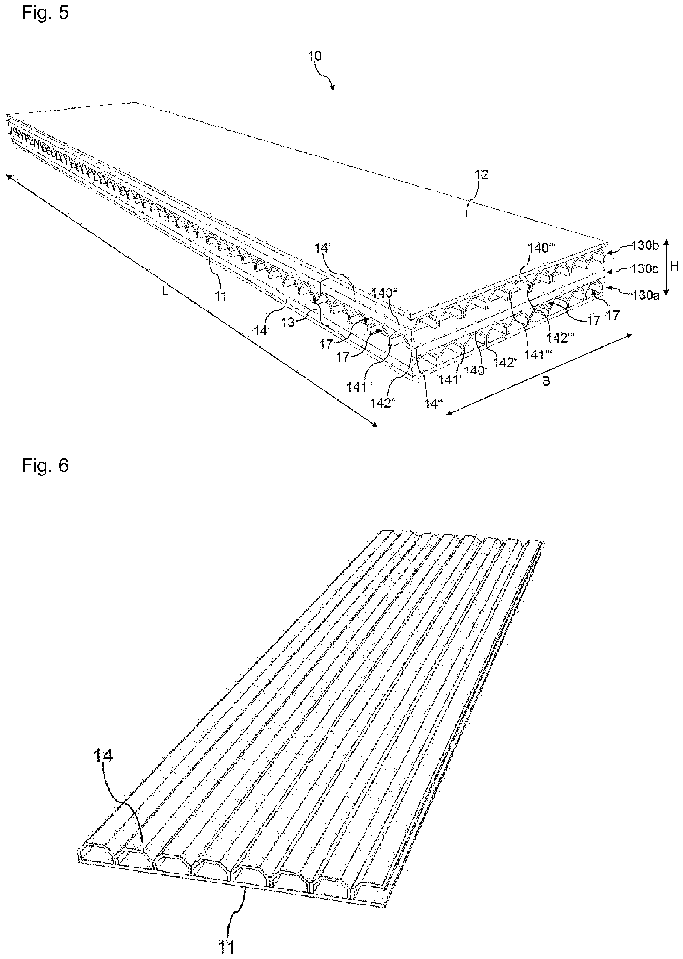

Die Figur 5 zeigt eine weitere Ausführungsform eines erfindungsgemäßen Bauelements 10, wobei die Schicht 13 durch eine erste Teilschicht 130a aus Rohrsegmenten 14', eine zweite Teilschicht 130b aus Rohrsegmenten 14" und eine weitere Teilschicht 130c aus Rohrsegmenten 14‴ gebildet ist. Dabei sind die Rohrsegmente 14' der ersten Teilschicht 130a in Bezug auf ihre Längserstreckungsrichtung I parallel zu den Rohrsegmenten 14" der zweiten Teilschicht 130b ausgerichtet. Die Rohrsegmente 14‴ der weiteren Teilschicht 130c sind hingegen in Bezug auf ihre Längserstreckungsrichtung I quer zu den Rohrsegmenten 14' der ersten Teilschicht 130a und den Rohrsegmenten 14" der zweiten Teilschicht 130b ausgerichtet.

Dabei sind die Rohrsegmente 14' der ersten Teilschicht 130a mittels ihrer Schnittenden 141',142' mit der ersten Deckplatte 11 und mittels ihrer Wandungen 140' mit den Schnittenden 141‴,142‴ der Rohrsegmente 14‴ der weiteren Teilschicht 130c mechanisch verbunden. Die Rohrsegmente 14‴ der weiteren Teilschicht 130c sind mittels ihrer Wandungen 140‴ mit den Schnittenden 141",142" der Rohrsegmente 14" der zweiten Teilschicht 130b mechanisch verbunden. Die Rohrsegmente 14" der zweiten Teilschicht 130b sind weiterhin mittels ihrer Wandungen 140" mit der zweiten Deckplatte 12 mechanisch verbunden.

Die Rohrsegmente 14',14", 14‴ der benachbarten Teilschichten 130a,130b,130c bilden miteinander Hohlräume 17 aus, die insbesondere mit einem Dämmstoff, z.B. in Form eines Dämmelements 16 gefüllt sein können.

Die Figur 6 zeigt ein Zwischenprodukt zur Herstellung eines erfindungsgemäßen Bauelements 10. Das Zwischenprodukt weist eine erste Deckplatte 11 und in Bezug auf ihre Längserstreckungsrichtung I parallel ausgerichtete Rohrsegmente 14 auf, die mit ihren Schnittenden 141,142 mit der ersten Deckplatte 11 mechanisch verbunden sind. Durch Stapeln und mechanisches Verbinden solcher Zwischenprodukte lassen sich insbesondere Bauelemente 10 der in den Figuren 3 und 4 dargestellten Ausführungsformen erzeugen, wobei zur Erzeugung des in Figur 4 gezeigten Bauelements 10 zusätzlich eine zweite Deckplatte 12 mit der zweiten Teilschicht 130b verbunden wird.

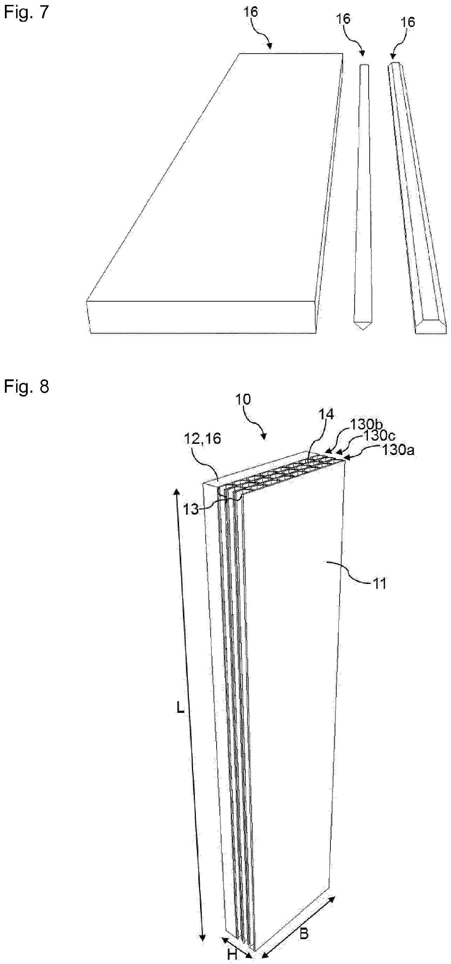

Die Figur 7 zeigt drei verschiedene Ausführungsformen von Dämmelementen 16, die mit erfindungsgemäßen Bauelementen 10 verbunden werden können. Die links dargestellte Dämmstoffplatte kann insbesondere als erste oder zweite Deckplatte 11,12 verwendet werden oder mit einer ersten oder zweiten Deckplatte 11,12 mechanisch verbunden werden. Eine solche Konfiguration kann insbesondere zur Außenisolierung von Wandelementen verwendet werden.

Das dargestellte längliche Dämmelement 16 mit dreieckigem Querschnitt kann insbesondere in einen entsprechend geformten Hohlraum 17 zwischen einer ersten oder zweiten Deckplatte 11,12 oder ersten oder zweiten Zwischenplatte 15a,15b und zwei benachbart angeordneten Rohrsegmenten 14 zumindest teilweise formschlüssig eingebracht werden. Diese Hohlräume 17 sind in den Figuren 4 und 5 dargestellt.

Das längliche Dämmelement 16 mit achtecksegmentförmigem Querschnitt kann insbesondere in einen Hohlraum 17 zumindest teilweise formschlüssig eingebracht werden, der von einem Rohrsegment 14 mit einem entsprechend geformten Querschnitt und einer entsprechenden ersten Deckplatte 11 bzw. ersten oder zweiten Zwischenplatte 15a,15b gebildet wird. Solche Hohlräume 17 sind in den Figuren 3, 4 und 5 dargestellt. Es sind auch weitere Ausgestaltungsformen von Dämmelementen 16 denkbar, die in Hohlräume 17 des erfindungsgemäßen Bauelements 10, insbesondere formschlüssig, einbringbar sind.

Die Figuren 8-10 zeigen erfindungsgemäße Bauelemente 10, die analog zu der in Figur 4 gezeigten Ausführungsform aufgebaut sind, wobei die zweite Deckplatte 12 jeweils durch ein plattenförmiges Dämmelement 16 gebildet ist. Solche Bauelemente 10 eignen sich als Wandelemente, wobei insbesondere die als Dämmelement 16 ausgeformte zweite Deckplatte 12 der Außenseite der Wand zugewandt ist. In diesem Fall dient das Dämmelement 16 der Außenisolierung.

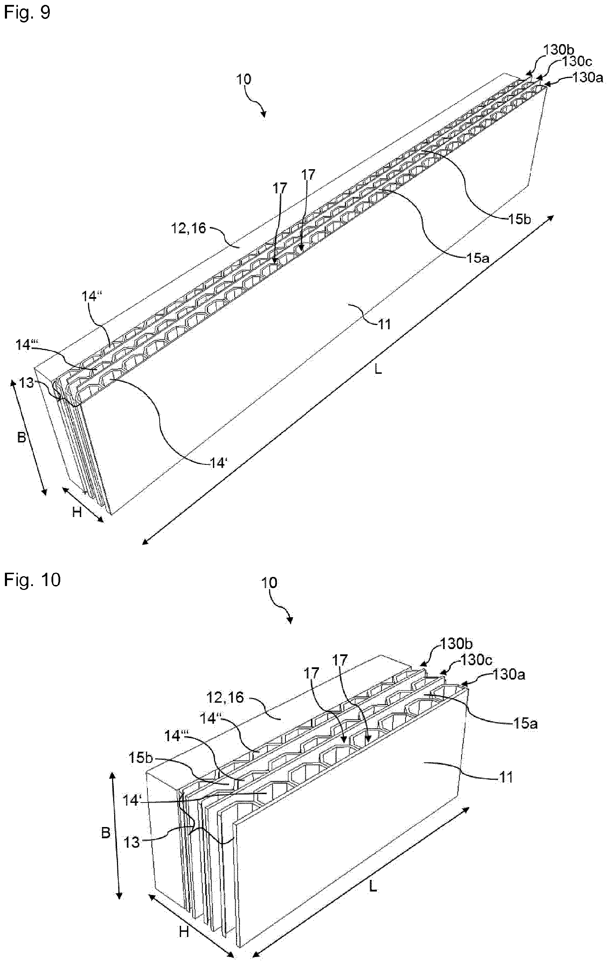

Das in Figur 8 dargestellte Bauelement 10 ist in der dargestellten Ausrichtung als aufrechtes Wandelement verwendbar und das in Figur 9 dargestellte Bauelement ist als quer angeordnetes Wandelement verwendbar. Das in Figur 10 dargestellte Bauelement 10 weist die Form eines Ziegelsteins auf und eignet sich zum Aufbau größerer Strukturen durch Verbinden mehrerer Bauelemente.

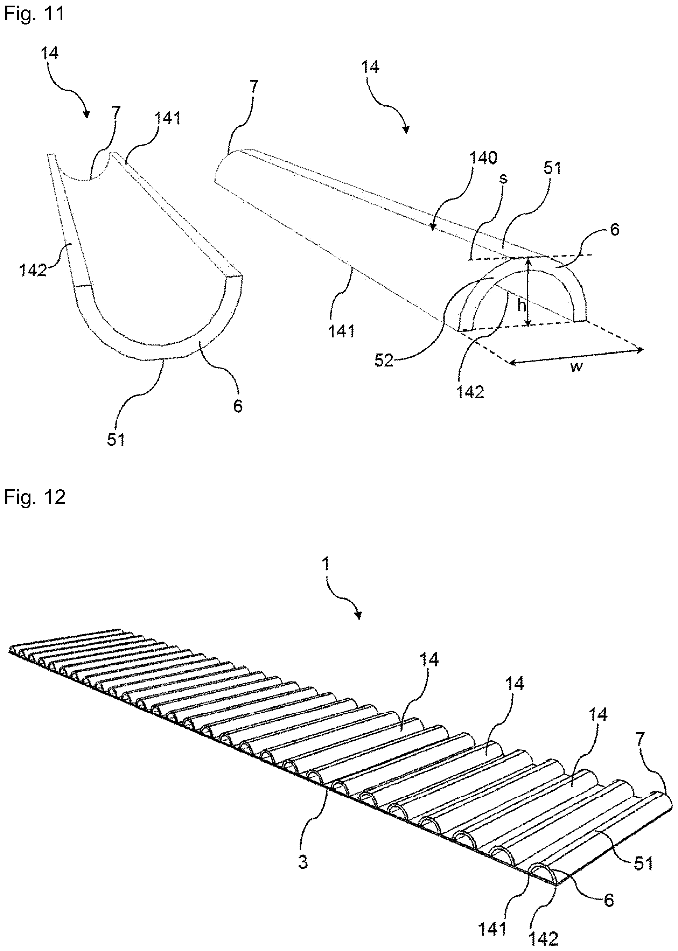

Die Fig. 11 zeigt ein Rohrsegment 14 mit einem kreissegmentförmigen Querschnitt und einer zusätzlichen Abflachung 51, welche an der Wandung 140 des Rohrsegments 14 angeordnet ist. Das Rohrsegment 14 ist abgesehen von seinem kreissegmentförmigen Querschnitt analog zu dem in Fig. 1 gezeigten Rohrsegment 14 ausgebildet. In dem in Fig. 11 gezeigten Beispiel wird die Abflachung 51 durch eine gedachte Sekante s eines den Querschnitt der Wandung 140 bildenden Kreisringabschnitt 52 gebildet, wobei in diesem Beispiel die Schnittflächen 6,7 des Rohrsegments 4 den Querschnitt der Wandung 5 bilden. Dabei ist die Sekante s so angeordnet, dass der äußere das Kreisringabschnitt 52 begrenzende Kreis an zwei Punkten von der Sekante s geschnitten wird, der innere das Kreisringabschnitt 52 begrenzende Kreis jedoch nicht von der Sekante s geschnitten wird. Die dargestellte Abflachung 51 ist im Bereich des Zenits, also am höchsten Punkt des Kreisringabschnitts 52 angeordnet.

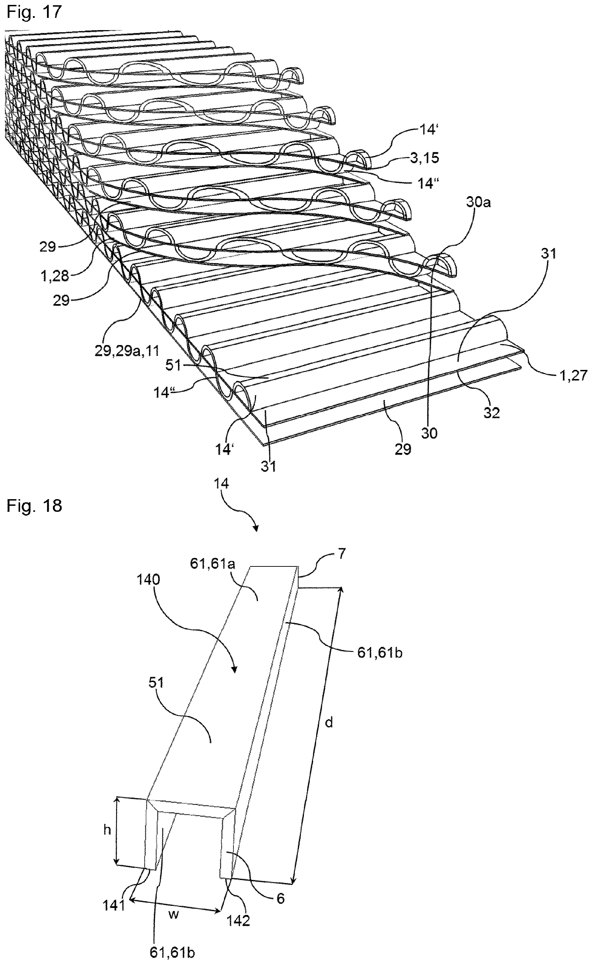

Die Fig. 12 zeigt eine perspektivische Darstellung einer ersten Ausgestaltung eines Stegs 1. Der Steg 1 weist eine Stegbasis 3 auf, die an einer Verbindungsfläche mit einer Mehrzahl von Rohrsegmenten 14 verbunden ist, wobei die Verbindungsfläche mit den Schnittenden 141,142 der Rohrsegmente 14 verbunden sind. In dem gezeigten Beispiel sind alle dargestellten Rohrsegmente 14 auf derselben Verbindungsfläche angeordnet, wobei die gegenüberliegende Fläche der Stegbasis 3 nicht mit Rohrsegmenten 14 verbunden ist. Des Weiteren sind die gezeigten Rohrsegmente 14 in Bezug auf die Richtung ihrer Längserstreckung parallel zueinander und mit einem Abstand zueinander angeordnet. Die in Fig. 12 dargestellten Rohrsegmente 14 weisen jeweils eine Abflachung 51 auf, wobei die Abflachungen 51 analog zu der in Fig. 11 dargestellten Abflachung 51 ausgeformt sind. Es sind jedoch auch andere Formen von Abflachungen 51 möglich. Auch können bei der in Fig. 12 gezeigten Anordnung bei einigen oder allen Rohrsegmenten 14 die Abflachungen 51 fehlen. Selbstverständlich müssen die Rohrsegmente 14 keinen kreissegmentförmigen Querschnitt aufweisen, sondern können z.B. auch einen achtecksegmentförmigen, trapezsegmentförmigen oder U-förmigen Querschnitt aufweisen (siehe z.B. die in den Figuren 18 bis 20 dargestellten Rohrsegmente 14).

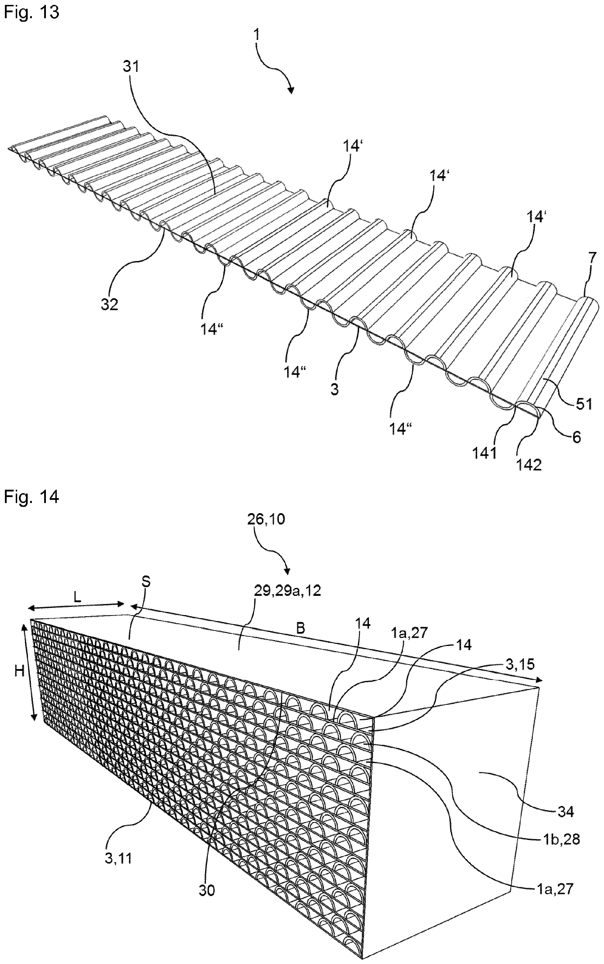

Die Fig. 13 zeigt eine zweite Ausgestaltung eines Stegs 1. Die Stegbasis 3 weist eine erste Fläche 31 sowie eine zweite Fläche 32 auf, wobei eine Mehrzahl von ersten Rohrsegmenten 14' mit der ersten Fläche 31 verbunden ist und wobei eine Mehrzahl von zweiten Rohrsegmenten 14" mit der zweiten Fläche 32 verbunden ist. Die gezeigten Rohrsegmente 14',14"sind in Bezug auf die Richtung ihrer Längserstreckung parallel zueinander angeordnet. Dabei sind die ersten Rohrsegmente 14'versetzt zu den zweiten Rohrsegmenten 14"angeordnet, so dass sich im Querschnitt, das heißt mit Blick auf die Schnittflächen 6,7 eine wellenförmige Anordnung ergibt. Die in Fig. 13 dargestellten

Rohrsegmente 14',14"weisen ebenfalls jeweils eine Abflachung 51 auf, wobei die Abflachungen 51 analog zu der in Fig. 11 dargestellten Abflachung 51 ausgeformt sind. Es sind jedoch auch andere Formen von Abflachungen 51 möglich. Auch können bei der in Fig. 13 gezeigten Anordnung bei einigen oder allen Rohrsegmenten 14',14" die Abflachungen 51 fehlen. Zudem können die Rohrsegmente 14',14" statt dem in Fig. 13 gezeigten kreissegmentförmigen Querschnitt z.B. auch einen achtecksegmentförmigen, trapezsegmentförmigen oder U-förmigen Querschnitt aufweisen (siehe z.B. die in den Figuren 18 bis 20 dargestellten Rohrsegmente 14).

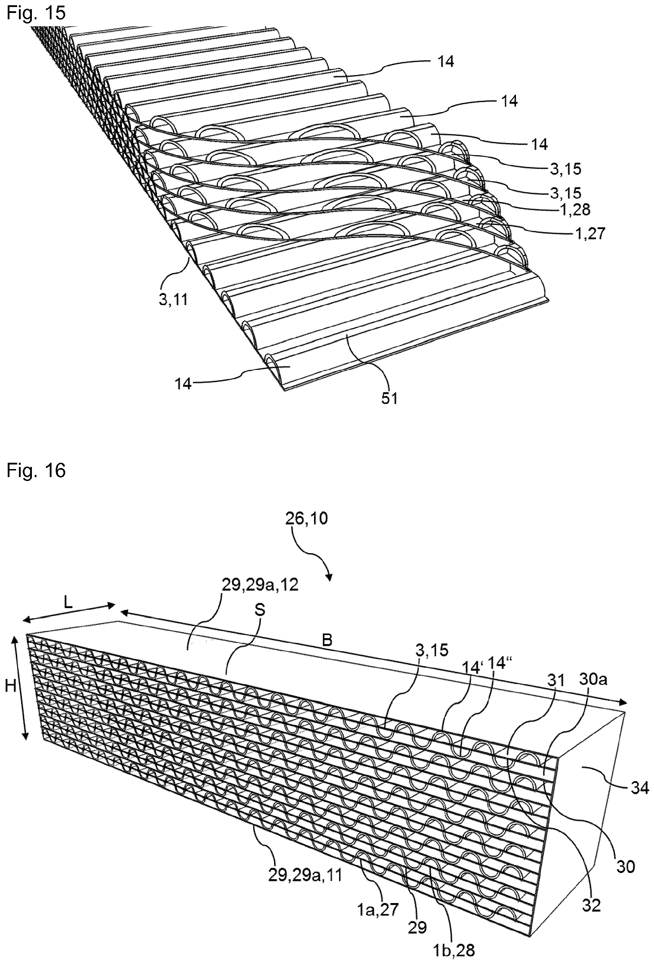

Die Fig. 14 zeigt eine perspektivische Ansicht einer ersten Ausgestaltung eines Sandwich-Blocks 26 und die Fig. 15 zeigt eine perspektivische Ansicht eines Teilschnitts einer derartigen Ausgestaltung des Sandwich-Blocks 26.

Der dargestellte Sandwich-Block 26 weist eine Mehrzahl von Stegschichten 27,28 aus jeweils einem Steg 1a,1b und eine Blockplattenschicht 29 aus einer Platte, insbesondere einer Holzplatte, auf, wobei die Stegschichten 27,28 und die Blockplattenschicht 29 schichtweise angeordnet und insbesondere miteinander verbunden sind. Dabei sind die Stegbasen 3 der Stege 1a,1b der Stegschichten 27,28 parallel zu der Platte der Blockplattenschicht 29 angeordnet und die Rohrsegmente 14 sind in Bezug auf die Richtung ihrer Längserstreckung parallel zueinander angeordnet. Die Wandungen 140 der Rohrsegmente 14 der ersten Stege 1a der ersten Stegschicht 27 sind mit der Stegbasis 3 der zweiten Stege 1b der benachbarten zweiten Stegschicht 28 verbunden, insbesondere mittels der Abflachungen 51.

Die in Fig. 14 und 15 dargestellten Stege 1a,1b weisen die in Fig. 12 gezeigte Ausgestaltung auf, wobei die Stege 1a,1b benachbarter Stegschichten 27,28 in dem hier gezeigten Beispiel derart versetzt zueinander angeordnet sind, dass die Rohrsegmente 14 der ersten Stege 1a über bzw. unter einem entsprechenden Abstand zwischen zwei Rohrsegmenten 14 der benachbarten zweiten Stege 1b angeordnet sind.

Der Sandwich-Block 26 umfasst weiterhin eine Deckplatte 29a, welche parallel zu den

Stegschichten 27,28 und den Blockplattenschichten 29 angeordnet ist und eine Randplatte 34, die senkrecht zu den Stegschichten 27,28 und den Blockplattenschichten 29 angeordnet ist. Sowohl die Deckplatte 29a als auch die Randplatte 34 schließt den Sandwich-Block 26 einseitig ab.

Der in der Figur 14 dargestellte Sandwich-Block 26 eignet sich insbesondere als Bauelement 10 im Sinne der vorliegenden Erfindung mit einer Gesamtlänge L, einer Gesamtbreite B und einer Gesamthöhe H. Dabei bildet die Stegbasis 3 des untersten Stegs 1 die erste Deckplatte 11 des Bauelements 10 und die Deckplatte 29a bildet die zweite Deckplatte 12 des Bauelements 10. Die Stegbasen 3 der zwischen dem untersten Steg 1 und der Deckplatte 29a angeordneten Stege 1 bilden Zwischenplatten 15 des Bauelements 10. Die Rohrsegmente 14 der Stegschichten 27,28 bilden dabei jeweils Teilschichten 130 des Bauelements 10.

Die Fig. 16 zeigt eine perspektivische Ansicht einer zweiten Ausgestaltung eines Sandwich-Blocks 26 und die Fig. 17 zeigt eine perspektivische Ansicht eines Teilschnitts einer derartigen Ausgestaltung des Sandwich-Blocks 26. Der dargestellte Sandwich-Block 26 weist eine Mehrzahl von Stegschichten 27,28 aus jeweils einem Steg 1a,1b sowie einer Mehrzahl von Blockplattenschichten 29 aus jeweils einer Platte, insbesondere einer Holzplatte, auf, wobei die Stegschichten 27,28 und die Blockplattenschichten 29 schichtweise angeordnet und insbesondere miteinander verbunden sind. Dabei sind die Stegbasen 3 der Stege 1a,1b der Stegschichten 27,28 parallel zu der Platte der Blockplattenschicht 29 angeordnet und die Rohrsegmente 14 sind in Bezug auf die Richtung ihrer Längserstreckung parallel zueinander angeordnet. Die Stegschichten 27,28 sind abwechselnd mit den Blockplattenschichten 29 derart schichtweise angeordnet, dass eine erste Stegschicht 27 mit einer ersten Plattenseite 30 der Blockplattenschicht 29 verbunden ist und besagte Blockplattenschicht 29 mittels einer zweiten Plattenseite 30b mit einer zweiten Stegschicht 28 verbunden ist.

Die in Fig. 16 und 17 dargestellten Stege 1a,1b weisen die in Fig. 13 gezeigte Ausgestaltung auf. Dabei sind die Wandungen 140 der ersten Rohrsegmente 14' der ersten Stege 1a der ersten Stegschicht 27 mit einer ersten Plattenseite 30 der Platte der benachbarten Blockplattenschicht 29 verbunden und die Wandungen 140 der zweiten Rohrsegmente 14" der zweiten Stege 1b der zweiten Stegschicht 28 sind mit einer der ersten Plattenseite 30 gegenüberliegenden zweiten Plattenseite 30a verbunden. Insbesondere sind die ersten Rohrsegmente 14' und die zweiten Rohrsegmente 14" mittels ihrer jeweiligen Abflachungen 51 mit der entsprechenden Platte verbunden. Die Stege 1a,1b benachbarter Stegschichten 27,28 sind in dem hier gezeigten Beispiel derart zueinander angeordnet, dass jedes erste Rohrsegment 14' der ersten Stegschicht 27 über bzw. unter einem entsprechenden zweiten Rohrsegment 14" der benachbarten zweiten Stegschicht 28 angeordnet ist.

Der Sandwich-Block 26 umfasst weiterhin eine Deckplatte 29a, welche parallel zu den

Stegschichten 27,28 und den Blockplattenschichten 29 angeordnet ist und eine Randplatte 34, die senkrecht zu den Stegschichten 27,28 und den Blockplattenschichten 29 angeordnet ist. Sowohl die Deckplatte 29a als auch die Randplatte 34 schließt den Sandwich-Block 26 einseitig ab.

Auch der in der Figur 16 dargestellte Sandwich-Block 26 eignet sich insbesondere als Bauelement 10 im Sinne der vorliegenden Erfindung mit einer Gesamtlänge L, einer Gesamtbreite B und einer Gesamthöhe H. Dabei bilden die Deckplatten 29a jeweils die erste Deckplatte 11 und die zweite Deckplatte 12 des Bauelements 10. Die Stegbasen 3 der zwischen den Deckplatten 29a angeordneten Stege 1 bilden Zwischenplatten 15 des Bauelements 10. Die Rohrsegmente 14',14" der Stegschichten 27,28 bilden dabei jeweils Teilschichten 130 des Bauelements 10.

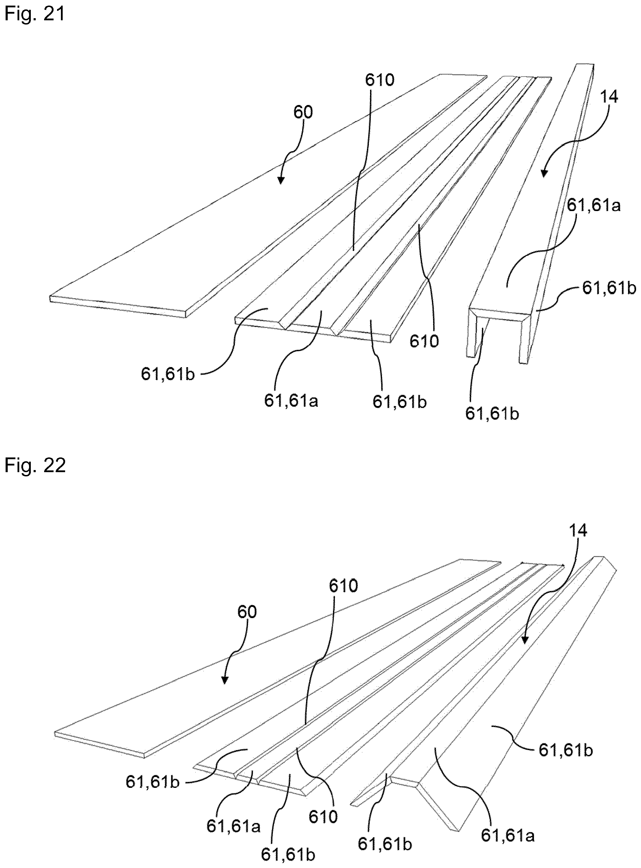

Die Fig. 18-20 zeigen Rohrsegmente 14 mit Wandungen 140, welche ein eckiges Querschnittsprofil aufweisen. Dabei zeigt Fig. 18 ein Rohrsegment 14 mit einer im Querschnitt U-förmigen Wandung 140 mit zwei Ecken. Ein derartiges Rohrsegment 14 ist insbesondere aus drei miteinander verbundenen, insbesondere verleimten, Leisten 61 gebildet, wobei die Leisten 61 in einem Winkel von 90° zueinander angeordnet sind. Dabei bildet die mittlere Leiste 61a eine parallel zu der Segmentbreite w positionierte Abflachung 51 der Wandung 140. Derartige Leisten 61 sind ebenfalls in Fig. 21 gezeigt und können insbesondere durch Ausfräsen von entsprechend gewinkelten Gehrungen 610 aus einem in Fig. 21 gezeigten Brett 60 hergestellt werden. Hierbei ist zu beachten, dass die Gehrungen 610 insbesondere nicht durchgängig ausgeführt sind, so dass die Leisten 61 bei der Erzeugung der Gehrungen 610 nicht vollständig voneinander getrennt werden, sondern durch eine Verbindungsschicht an der jeweiligen Gehrung 610 zusammengehalten werden. Dadurch wird ein Zusammenfügen des Rohrsegments 14 erleichtert. Zusätzlich bilden die Gehrungen 610 auf diese Weise Vertiefungen zur Aufnahme von Leim, was ebenfalls ein Zusammenfügen der Leisten 61 erleichtert.

Alternativ dazu kann ein solches Rohrsegment 14 durch Zerteilen, insbesondere Zersägen eines Rohrs mit einem quadratischen Querschnitt erzeugt werden.

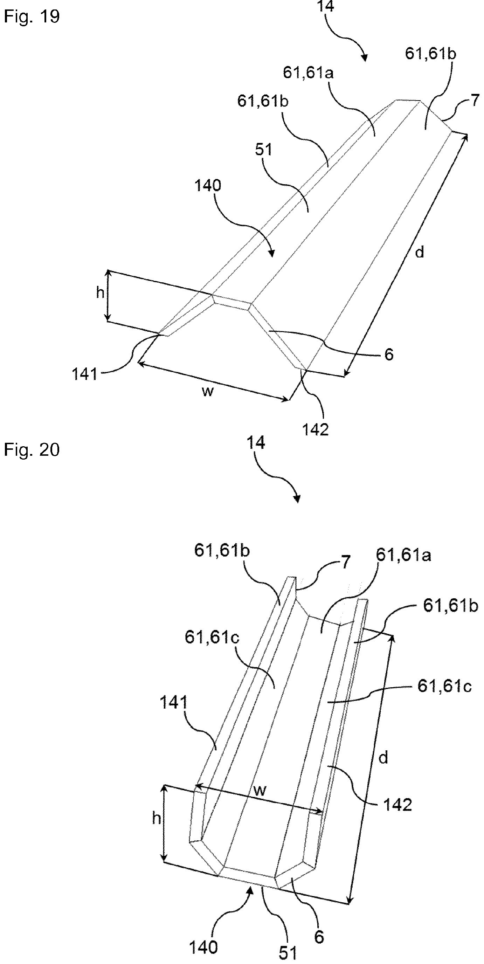

Die Fig. 19 zeigt ein Rohrsegment 14 mit einer im Querschnitt trapezsegmentförmigen Wandung 140 mit zwei Ecken. Ein derartiges Rohrsegment 14 ist insbesondere aus drei miteinander verbundenen, insbesondere verleimten, Leisten 61 gebildet, wobei die Leisten 61 in einem stumpfen Winkel zueinander angeordnet sind. In der gezeigten Anordnung weist die mittlere Leiste 61a eine geringere Breite auf als die beiden gewinkelten äußeren Leisten 61b. Die mittlere Leiste 61a ist hier ebenfalls parallel zu der Segmentbreite w angeordnet und bildet eine Abflachung 51. Derartige Leisten 61 sind ebenfalls in Fig. 22 gezeigt und können insbesondere durch Ausfräsen von entsprechend gewinkelten Gehrungen 610 aus einem in Fig. 22 gezeigten Brett 60 hergestellt werden.

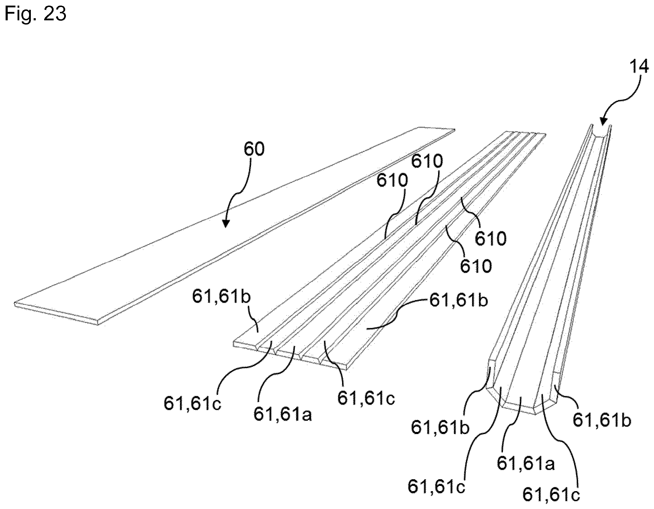

Die Fig. 20 zeigt ein Rohrsegment 14 mit einer im Querschnitt achtecksegmentförmigen Wandung 140 mit vier Ecken. Ein derartiges Rohrsegment 14 ist insbesondere aus fünf miteinander verbundenen, insbesondere verleimten, Leisten 61 gebildet, wobei die Leisten 61 jeweils einen Winkel von 45° zueinander aufweisen. Dabei sind die äußeren Leisten 61b, welche die Schnittenden 141,142 bilden, in einem Winkel von 90° zu der Segmentbreite w angeordnet und eine mittlere Leiste 61a, die durch zwei Verbindungsleisten 61c mit den äußeren Leisten 61b verbunden ist, ist parallel zu der Segmentbreite w angeordnet. Diese mittlere Leiste 61a bildet eine Abflachung 51 der Wandung 140. Derartige Leisten 61 sind ebenfalls in Fig. 23 gezeigt und können insbesondere durch Ausfräsen von entsprechend gewinkelten Gehrungen 610 aus einem in Fig. 23 gezeigten Brett 60 hergestellt werden.

**Bezugszeichenliste**

| | |
|---|---|
| 1 | Steg |
| 1a | Erster Steg |
| 1b | Zweiter Steg |
| 3 | Stegbasis |
| 6 | Erste Schnittfläche |
| 7 | Zweite Schnittfläche |
| 10 | Bauelement |
| 11 | Erste Deckplatte |
| 12 | Zweite Deckplatte |
| 13 | Schicht |
| 130 | Teilschicht |
| 130a | Erste Teilschicht |
| 130b | Zweite Teilschicht |
| 130c | Weitere Teilschicht |
| 14, 14',14",14‴ | Rohrsegment |
| 15 | Zwischen platte |
| 15a | Erste Zwischenplatte |
| 15b | Zweite Zwischenplatte |
| 16 | Dämmelement |
| 17 | Hohlraum |
| 140,140',140",140‴ | Wandung |
| 141,141',141",141‴,142,142',142",142‴ | Schnittenden |
| 26 | Sandwich-Block |
| 27 | Erste Stegschicht |
| 28 | Zweite Stegschicht |
| 29 | Blockplattenschicht |
| 29a | Deckplatte |
| 30 | Erste Plattenseite |
| 30a | Zweite Plattenseite |
| 31 | Erste Fläche |
| 32 | Zweite Fläche |
| 34 | Rand platte |
| 51 | Abflachung |
| 52 | Kreisringabschnitt |
| 60 | Brett |
| 61 | Leiste |
| 61a | mittlere Leiste |
| 61b | äußere Leiste |
| 61c | Verbindungsleiste |
| 610 | Gehrung |
| h | Segmenthöhe |
| w | Segmentbreite |
| s | Sekante |
| I | Längserstreckungsrichtung |
| L_{R} | Rohrlänge |
| L | Gesamtlänge |
| B | Gesamtbreite |
| H | Gesamthöhe |

## Patentansprüche

1. Bauelement (10) mit einer Gesamtlänge (L), einer Gesamtbreite (B) und einer Gesamthöhe (H), wobei das Bauelement (10) wenigstens die folgenden Komponenten aufweist:
- eine erste Deckplatte (11) und eine parallel zu der ersten Deckplatte (11) angeordnete zweite Deckplatte (12), wobei die erste Deckplatte (11) und die zweite Deckplatte (12) jeweils eine Länge aufweisen, die der Gesamtlänge (L) entspricht, und wobei die erste Deckplatte (11) und die zweite Deckplatte (12) jeweils eine Breite aufweisen, die der Gesamtbreite (B) entspricht,
- eine zwischen der ersten Deckplatte (11) und der zweiten Deckplatte (12) angeordnete Schicht (13), die eine Mehrzahl von Rohrsegmenten (14) mit jeweils einer in Längserstreckungsrichtung verlaufenden Rohrlänge (L_{R}) aufweist, wobei die Rohrsegmente (14) in Bezug auf die Rohrlänge (L_{R}) in Richtung der Gesamtlänge (L) und/ oder in Richtung der Gesamtbreite (B) angeordnet sind, und wobei die Rohrsegmente (14) aus einem Holzwerkstoff bestehen oder einen Holzwerkstoff aufweisen,
**dadurch gekennzeichnet, dass**
die Rohrsegmente (14) jeweils eine Wandung (140) aufweisen, die von genau zwei Schnittenden (141,142) in Umfangsrichtung des jeweiligen Rohrsegments (14) begrenzt ist, wobei die Rohrlänge (L_{R}) der Gesamtlänge (L) und/ oder der Gesamtbreite (B) entspricht.

2. Bauelement (10) nach Anspruch 1, **dadurch gekennzeichnet, dass**
- die Schicht (13) wenigstens ein Rohrsegment (14) aufweist, das mit der ersten Deckplatte (11) mechanisch verbunden ist, wobei die Rohrlänge (L_{R}) des wenigstens einen Rohrsegments (14) in Richtung der Gesamtlänge (L) verläuft, und wobei die Rohrlänge (L_{R}) mindestens der Gesamtbreite (B), insbesondere mindestens dem Zweifachen der Gesamtbreite (B), entspricht, oder
- die Schicht (13) wenigstens ein Rohrsegment (14) aufweist, dessen Rohrlänge (L_{R}) mindestens dem Zweifachen der Gesamthöhe (H), insbesondere mindestens dem Vierfachen der Gesamthöhe (H), entspricht, oder
- die Gesamtlänge (L) weniger als 800 mm, insbesondere weniger als 600 mm, beträgt und die Gesamtbreite (B) weniger als 400 mm, insbesondere weniger als 300 mm, beträgt und die Gesamthöhe (H) weniger als 400 mm, insbesondere weniger als 250 mm, beträgt.

3. Bauelement (10) nach Anspruch 1 oder 2, **dadurch gekennzeichnet, dass** die Rohrsegmente (14) einen eckigen Querschnitt, insbesondere einen achtecksegmentförmigen Querschnitt, aufweisen.

4. Bauelement (10) nach einem der Ansprüche 1 bis 3, **dadurch gekennzeichnet, dass** die Rohrsegmente (14) einen trapezsegmentförmigen oder achtecksegmentförmigen Querschnitt, insbesondere einen trapezsegmentförmigen Querschnitt, aufweisen.

5. Bauelement (10) nach einem der Ansprüche 1 bis 4, **dadurch gekennzeichnet, dass** die Rohrsegmente (14) einen achtecksegmentförmigen Querschnitt aufweisen.

6. Bauelement (10) nach einem der Ansprüche 1 bis 5, **dadurch gekennzeichnet, dass** die Schicht (13) aus einer in Richtung der Gesamtlänge (L) oder der Gesamtbreite (B) verlaufenden Reihe von parallel zueinander angeordneten Rohrsegmenten (14) gebildet ist.

7. Bauelement (10) nach Anspruch 6, **dadurch gekennzeichnet, dass**
- alle Rohrsegmente (14) der Reihe mittels ihrer Schnittenden (141,142) mit der ersten Deckplatte (11) mechanisch verbunden sind oder
- alle Rohrsegmente (14) der Reihe mittels ihrer Schnittenden (141,142) mit der zweiten Deckplatte (12) mechanisch verbunden sind oder
- die Rohrsegmente (14) der Reihe mittels ihrer Schnittenden (141,142) abwechselnd mit der ersten Deckplatte (11) und der zweiten Deckplatte (12) mechanisch verbunden sind.

8. Bauelement (10) nach einem der Ansprüche 1 bis 7, **dadurch gekennzeichnet, dass** die Schicht (13) wenigstens eine Teilschicht (130) aufweist, wobei die wenigstens eine Teilschicht (130) jeweils aus einer in Richtung der Gesamtlänge (L) oder der Gesamtbreite (B) verlaufenden Reihe von parallel zueinander angeordneten Rohrsegmenten (14) gebildet ist.

9. Bauelement (10) nach Anspruch 8, **dadurch gekennzeichnet, dass** die Schicht (13) eine erste Teilschicht (130a) und eine zweite Teilschicht (130b) aufweist, wobei die Rohrsegmente (14') der ersten Teilschicht (130a) mittels ihrer Schnittenden (141',142') mit der ersten Deckplatte (11) mechanisch verbunden sind, und wobei die Rohrsegmente (14") der zweiten Teilschicht (130b) mittels ihrer Schnittenden (141",142") mit der zweiten Deckplatte (12) mechanisch verbunden sind,

10. Bauelement (10) nach Anspruch 8 oder 9, **dadurch gekennzeichnet, dass** die Rohrsegmente (14') der wenigstens einen Teilschicht (130) mittels ihrer Wandungen (140') jeweils mit entsprechenden Wandungen (140") der Rohrsegmente (14") einer benachbarten Teilschicht (130) mechanisch verbunden sind.

11. Bauelement (10) nach einem der Ansprüche 8 bis 10, **dadurch gekennzeichnet, dass** die Schicht (13) weiterhin wenigstens eine Zwischenplatte (15) aufweist, wobei die Rohrsegmente (14') der wenigstens einen Teilschicht (130) mittels ihrer Schnittenden (141',142') über die wenigstens eine Zwischenplatte (15) mit den Rohrsegmenten (14") einer benachbarten Teilschicht (130) mechanisch verbunden sind.

12. Bauelement (10) nach einem der Ansprüche 8 bis 11, **dadurch gekennzeichnet, dass** die Rohrlängen (L_{R}) der Rohrsegmente (14') der wenigstens einen Teilschicht (130) in Richtung der Gesamtlänge (L) des Bauelements (10) verlaufen, wobei die Rohrlängen (L_{R}) der Rohrsemente (14") wenigstens einer weiteren Teilschicht (130) in Richtung der Gesamtbreite (B) des Bauelements (10) verlaufen.

13. Bauelement (10) nach einem Anspruch 8 bis 12, **dadurch gekennzeichnet, dass** die Schicht eine erste Teilschicht (130a), eine zweite Teilschicht (130b) und eine zwischen der ersten Teilschicht (130a) und der zweiten Teilschicht (130b) angeordnete weitere Teilschicht (130c) aufweist, wobei die Rohrsegmente (14') der ersten Teilschicht (130a) mittels ihrer Schnittenden (141',142') mit der ersten Deckplatte (11) mechanisch verbunden sind, und wobei die Rohrsegmente (14") der zweiten Teilschicht (130b) mittels ihrer Schnittenden (141",142") mit der zweiten Deckplatte (12) mechanisch verbunden sind, und wobei die Rohrsegmente (14',14") der ersten und zweiten Teilschichten (130a,130b) in Richtung der Gesamtlänge (L) des Bauelements (10) verlaufen und wobei die Rohrsegmente (14‴) der weiteren Teilschicht (130c) in Richtung der Gesamtbreite (B) des Bauelements (10) verlaufen.

14. Bauelement (10) nach einem der vorhergehenden Ansprüche, **dadurch gekennzeichnet, dass** das Bauelement (10) wenigstens ein Dämmelement (16) aufweist.

15. Bauelement (10) nach Anspruch 14, **dadurch gekennzeichnet, dass** das wenigstens eine Dämmelement (16) in einem Hohlraum (17) angeordnet ist, wobei der Hohlraum (17) von wenigstens einem der Rohrsegmente (14) der Schicht (13) gebildet wird.

## Claims

1. Component (10) having an total length (L), an total width (B), and an total height (H), wherein the component (10) comprises at least the following components:
- a first cover plate (11) and a second cover plate (12) arranged parallel to the first cover plate (11), wherein the first cover plate (11) and the second cover plate (12) respectively comprise a length corresponding to the total length (L), and wherein the first cover plate (11) and the second cover plate (12) respectively comprise a width corresponding to the total width (B),
- a layer (13) arranged between the first cover plate (11) and the second cover plate (12), comprising a plurality of tube segments (14), respectively having a tube length (L_{R}) extending in longitudinal direction, wherein the tube segments (14) are arranged with respect to the tube length (L_{R}) in direction of the total length (L) and/or in direction of the total width (B), and wherein the tube segments (14) are made of a wood material or comprise a wood material, **characterized in that**
- the tube segments (14) respectively comprise a wall (140) delimited by exactly two cut ends (141, 142) in circumferential direction of the respective tube segment (14), wherein the tube length (L_{R}) corresponds to the total length (L) and/or the total width (B).

2. Component (10) according to claim 1, **characterized in that**
- the layer (13) comprises at least one tube segment (14) which is mechanically connected to the first cover plate (11), wherein the tube length (L_{R}) of the at least one tube segment (14) extends in the direction of the total length (L), and wherein the tube length (L_{R}) corresponds to at least the total width (B), in particular at least twice the total width (B), or
- the layer (13) comprises at least one tube segment (14) whose tube length (L_{R}) is at least twice the total height (H), in particular at least four times the total height (H), or
- the total length (L) is less than 800 mm, in particular less than 600 mm, and the total width (B) is less than 400 mm, in particular less than 300 mm, and the total height (H) is less than 400 mm, in particular less than 250 mm.

3. Component (10) according to claim 1 or 2, **characterized in that** the tube segments (14) comprise an angular cross-section, in particular an octagonal segment-shaped cross-section.

4. Component (10) according to any of claims 1 to 3, **characterized in that** the tube segments (14) comprise a trapezoidal segment-shaped or octagonal segment-shaped cross section, in particular a trapezoidal segment-shaped cross section.

5. Component (10) according to any of claims 1 to 4, **characterized in that** the tube segments (14) comprise an octagonal segment-shaped cross section.

6. Component (10) according to any of claims 1 to 5, **characterized in that** the layer (13) is formed from a series of tube segments (14) arranged parallel to one another and extending in direction of the total length (L) or the total width (B).

7. Component (10) according to claim 6, **characterized in that**
- all tube segments (14) of the series are mechanically connected by means of their cut ends (141,142) to the first cover plate (11), or
- all tube segments (14) of the series are mechanically connected to the second cover plate (12) by means of their cut ends (141, 142), or
- the tube segments (14) of the series are mechanically connected alternately to the first cover plate (11) and the second cover plate (12) by means of their cut ends (141, 142).

8. Component (10) according to any of claims 1 to 7, **characterized in that** the layer (13) comprises at least one part-layer (130), wherein the at least one part-layer (130) is formed by a series of tube segments (14) arranged parallel to one another in direction of the total length (L) or total width (B).

9. Component (10) according to claim 8, **characterized in that** the layer (13) comprises a first part-layer (130a) and a second part-layer (130b), wherein the tube segments (14') of the first part-layer (130a) are mechanically connected by means of their cut ends (141', 142') to the first cover plate (11), and wherein the tube segments (14") of the second part-layer (130b) are mechanically connected by means of their cut ends (141", 142") to the second cover plate (12).

10. Component (10) according to claim 8 or 9, **characterized in that** the tube segments (14') of the at least one part-layer (130) are mechanically connected by means of their walls (140') respectively to corresponding walls (140") of the tube segments (14") of a neighboring part-layer (130).

11. Component (10) according to any of claims 8 to 10, **characterized in that** the layer (13) further comprises at least one intermediate plate (15), wherein the tube segments (14') of the at least one part-layer (130) are mechanically connected by means of their cut ends (141',142') via the at least one intermediate plate (15) to the tube segments (14") of a neighboring part-layer (130).

12. Component (10) according to any one of claims 8 to 11, **characterized in that** the tube lengths (L_{R}) of the tube segments (14') of the at least one part-layer (130) extend in direction of the total length (L) of the component (10), wherein tube lengths (L_{R}) of the tube segments (14") of at least one further part-layer (130) extend in direction of the total width (B) of the component (10).

13. Component (10) according to a claim 8 to 12, **characterized in that** the layer comprises a first part-layer (130a), a second part-layer (130b) and a further part-layer (130c) arranged between the first part-layer (130a) and the second part-layer (130b), wherein the tube segments (14') of the first part-layer (130a) are mechanically connected to the first cover plate (11) by means of their cut ends (141', 142') and wherein the tube segments (14") of the second part-layer (130b) are mechanically connected to the second cover plate (12) by means of their cut ends (141", 142"), and wherein the tube segments (14', 14") of the first and second part-layers (130a, 130b) extend in direction of the total length (L) of the component (10) and wherein the tube segments (14‴) of the further part-layer (130c) extend in direction of the total width (B) of the component (10).

14. Component (10) according to any of the preceding claims, **characterized in that** the component (10) comprises at least one insulating element (16).

15. Component (10) according to claim 14, **characterized in that** the at least one insulating element (16) is arranged in a cavity (17), wherein the cavity (17) is formed by at least one of the tube segments (14) of the layer (13).

## Revendications

1. Elément de construction (10) avec une longueur totale (L), une largeur totale (B) et une hauteur totale (H), dans lequel l'élément de construction (10) présente au moins les composants suivants :
- une première plaque de recouvrement (11) et une seconde plaque de recouvrement (12) disposée parallèlement à la première plaque de recouvrement (11), dans lequel la première plaque de recouvrement (11) et la seconde plaque de recouvrement (12) présentent chacune une longueur qui correspond à la longueur totale (L), et dans lequel la première plaque de recouvrement (11) et la seconde plaque de recouvrement (12) présentent chacune une largeur qui correspond à la largeur totale (B),
- une couche (13) disposée entre la première plaque de recouvrement (11) et la seconde plaque de recouvrement (12) qui présente une pluralité de segments tubulaires (14) avec chacun une longueur tubulaire (L_{R}) s'étendant dans une direction d'extension longitudinale, dans lequel les segments tubulaires (14) sont disposés par rapport à la longueur tubulaire (L_{R}) en direction de la longueur totale (L) et/ou en direction de la largeur totale (B), et dans lequel les segments tubulaires (14) se composent d'un matériau dérivé du bois ou présentent un matériau dérivé du bois,
**caractérisé en ce que** les segments tubulaires (14) présentent chacun une paroi (140) qui est limitée par exactement deux extrémités de coupe (141, 142) dans la direction circonférentielle du segment tubulaire respectif (14), dans lequel la longueur tubulaire (L_{R}) correspond à la longueur totale (L) et/ou la largeur totale (B).

2. Elément de construction (10) selon la revendication 1, **caractérisé en ce que**
- la couche (13) présente au moins un segment tubulaire (14) qui est connecté mécaniquement à la première plaque de recouvrement (11), dans lequel la longueur tubulaire (L_{R}) de l'au moins un segment tubulaire (14) s'étend en direction de la longueur totale (L), et dans lequel la longueur tubulaire (L_{R}) correspond au moins à la largeur totale (B), notamment au moins au double de la largeur totale (B), ou
- la couche (13) présente au moins un segment tubulaire (14) dont la longueur tubulaire (L_{R}) correspond au moins au double de la hauteur totale (H), notamment au moins au quadruple de la hauteur totale (H), ou
- la longueur totale (L) se monte à moins de 800 mm, notamment moins de 600 mm, et la largeur totale (B) se monte à moins de 400 mm, notamment moins de 300 mm, et la hauteur totale (H) se monte à moins de 400 mm, notamment moins de 250 mm.

3. Elément de construction (10) selon la revendication 1 ou 2, **caractérisé en ce que** les segments tubulaires (14) présentent une section transversale carrée, notamment une section transversale en forme de segment octogonal.

4. Elément de construction (10) selon une des revendications 1 à 3, **caractérisé en ce que** les segments tubulaires (14) présentent une section transversale en forme de segment trapézoïdal ou en forme de segment octogonal, notamment une section transversale en forme de segment trapézoïdal.

5. Elément de construction (10) selon une des revendications 1 à 4, **caractérisé en ce que** les segments tubulaires (14) présentent une section transversale en forme de segment octogonal.

6. Elément de construction (10) selon une des revendications 1 à 5, **caractérisé en ce que** la couche (13) est formée d'une série de segments tubulaires (14) disposés parallèlement l'un à l'autre, s'étendant en direction de la longueur totale (L) ou de la largeur totale (B).

7. Elément de construction (10) selon la revendication 6, **caractérisé en ce que**
- tous les segments tubulaires (14) de la série sont connectés mécaniquement au moyen de leurs extrémités de coupe (141, 142) à la première plaque de recouvrement (11) ou
- tous les segments tubulaires (14) de la série sont connectés mécaniquement au moyen de leurs extrémités de coupe (141, 142) à la seconde plaque de recouvrement (12) ou
- les segments tubulaires (14) de la série sont connectés mécaniquement au moyen de leurs extrémités de coupe (141, 142) en alternance à la première plaque de recouvrement (11) et la seconde plaque de recouvrement (12).

8. Elément de construction (10) selon une des revendications 1 à 7, **caractérisé en ce que** la couche (13) présente au moins une couche partielle (130), dans lequel l'au moins une couche partielle (130) est à chaque fois formée d'une série de segments tubulaires (14) disposés parallèlement l'un à l'autre, s'étendant en direction de la longueur totale (L) ou de la largeur totale (B).

9. Elément de construction (10) selon la revendication 8, **caractérisé en ce que** la couche (13) présente une première couche partielle (130a) et une seconde couche partielle (130b), dans lequel les segments tubulaires (14') de la première couche partielle (130a) sont connectés mécaniquement au moyen de leurs extrémités de coupe (141', 142') à la première plaque de recouvrement (11), et dans lequel les segments tubulaires (14") de la seconde couche partielle (130b) sont connectés mécaniquement au moyen de leurs extrémités de coupe (141", 142") à la seconde plaque de recouvrement (12).

10. Elément de construction (10) selon la revendication 8 ou 9, **caractérisé en ce que** les segments tubulaires (14') de l'au moins une couche partielle (130) sont connectés mécaniquement au moyen de leurs parois (140') chacun à des parois correspondantes (140") des segments tubulaires (14") d'une couche partielle voisine (130).

11. Elément de construction (10) selon une des revendications 8 à 10, **caractérisé en ce que** la couche (13) présente en outre au moins une plaque intermédiaire (15), dans lequel les segments tubulaires (14') de l'au moins une couche partielle (130) sont connectés mécaniquement au moyen de leurs extrémités de coupe (141', 142') par le biais de l'au moins une plaque intermédiaire (15) aux segments tubulaires (14") d'une couche partielle voisine (130).

12. Elément de construction (10) selon une des revendications 8 à 11, **caractérisé en ce que** les longueurs tubulaires (L_{R}) des segments tubulaires (14') de l'au moins une couche partielle (130) s'étendent en direction de la longueur totale (L) de l'élément de construction (10), dans lequel les longueurs tubulaires (L_{R}) des segments tubulaires (14") d'au moins une autre couche partielle (130) s'étendent en direction de la largeur totale (B) de l'élément de construction (10).

13. Elément de construction (10) selon une des revendications 8 à 12, **caractérisé en ce que** la couche présente une première couche partielle (130a), une seconde couche partielle (130b) et une autre couche partielle (130c) disposée entre la première couche partielle (130a) et la seconde couche partielle (130b), dans lequel les segments tubulaires (14') de la première couche partielle (130a) sont connectés mécaniquement au moyen de leurs extrémités de coupe (141', 142') à la première plaque de recouvrement (11), et dans lequel les segments tubulaires (14") de la seconde couche partielle (130b) sont connectés mécaniquement au moyen de leurs extrémités de coupe (141", 142") à la seconde plaque de recouvrement (12), et dans lequel les segments tubulaires (14', 14") des première et seconde couches partielles (130a, 130b) s'étendent en direction de la longueur totale (L) de l'élément de construction (10), et dans lequel les segments tubulaires (14‴) de l'autre couche partielle (130c) s'étendent en direction de la largeur totale (B) de l'élément de construction (10).

14. Elément de construction (10) selon une des revendications précédentes, **caractérisé en ce que** l'élément de construction (10) présente au moins un élément d'isolation (16).

15. Elément de construction (10) selon la revendication 14, **caractérisé en ce que** l'au moins un élément d'isolation (16) est disposé dans un espace creux (17), dans lequel l'espace creux (17) est formé d'au moins un des segments tubulaires (14) de la couche (13).
